# EUROPEAN PATENT APPLICATION

(11) **EP 4 564 457 A1**
(43) Date of publication of application: **04.06.2025**
(21) Application number: 22964762.3
(22) Date of filing: 09.11.2022
(51) Int. Cl.: H01M 4/134, H01M 4/1395, H01M 4/38

(54) **NEGATIVE ELECTRODE PLATE, SECONDARY BATTERY, ELECTRIC DEVICE, METHOD AND USE**

(71) Applicant: Contemporary Amperex Technology (Hong Kong) Limited, Central, Central And Western District (HK)
(72) Inventor: LIAO, Shangju, Ningde, Fujian 352100 (CN); HU, Bobing, Ningde, Fujian 352100 (CN); WANG, Hansen, Ningde, Fujian 352100 (CN); LIU, Chengyong, Ningde, Fujian 352100 (CN); CAI, Xiaolan, Ningde, Fujian 352100 (CN); LI, Yuan, Ningde, Fujian 352100 (CN); WU, Qifan, Ningde, Fujian 352100 (CN)
(74) Representative: Jacob, Reuben Ellis
(86) International application number: PCT/CN2022/130875
(87) International publication number: WO 2024/098287

(57) **Abstract**

Provided in the present application are a negative electrode plate, a secondary battery, an electric device, a method and the use. A negative electrode active material layer of the negative electrode plate comprises lithiophilic nanoparticles, and the lithiophilic nanoparticles can be alloyed with lithium.

## Description

### Technical Field

The present application relates to the technical field of secondary batteries, and particular to a negative electrode plate, a secondary battery, a power consuming device, method and use.

### Background Art

The statements herein merely provide background information related to the present application and may not necessarily constitute the prior art.

A clean and portable production and life style has increasingly become a common pursuit of society. Thus there is an urgent need for longer-cycle-life portable electronic products, electric automobiles, special electronic devices, etc. However, a lithium-ion battery using graphite as a negative electrode currently has an energy density increasingly unable to meet the demand, while the lithium metal battery using a lithium metal as a negative electrode, due to the dendrite growth of the lithium metal negative electrode, results in serious loss of the lithium metal and electrolyte, with a cycle life not ideal enough.

### Summary

In view of the above problems, the present application provides a negative electrode plate, a secondary battery, a power consuming device, a method and use thereof. A negative electrode active material layer of the negative electrode plate comprises lithium-philic nanoparticles capable of alloying with lithium, so as to inhibit the reactivity between a negative electrode material and an electrolyte, regulate and control the lithium deposition process, and effectively improve the cycle life of the negative electrode.

In a first aspect, the present application provides a negative electrode plate, comprising a negative electrode active material layer, wherein the negative electrode active material layer comprises a negative electrode active substance and lithium-philic nanoparticles capable of alloying with lithium.

The lithium-philic nanoparticles capable of alloying with lithium are introduced into the negative electrode active material layer of the negative electrode plate. The lithium-philic nanoparticles can provide a lower nucleation overpotential, induce the uniformly deposition of lithium in the negative electrode plate, also reduce a lithium precipitation overpotential in the electrode plate, and inhibit the reactivity between the negative electrode material and the electrolyte, so as to effectively improve the cycling performance (such as cycle life) of the battery.

In some embodiments, at least a part of the lithium-philic nanoparticles are distributed on a part of a surface of the negative electrode active substance.

In the negative electrode plate, the negative electrode active substance forms a negative electrode active framework. When at least a part of the lithium-philic nanoparticles are distributed on the surface of a part of the negative electrode active substance, namely the lithium-philic nanoparticles capable of alloying with lithium are introduced on the surface of the negative electrode active framework. The characteristic that the lithium-philic nanoparticles can be alloyed with the lithium and provide a lower nucleation overpotential, is used so as to reduce a lithium precipitation overpotential in the electrode plate, and induce the uniform deposition of the lithium on the negative electrode active framework, thereby forming an artificial alloying interface, inhibiting the reactivity between the negative electrode material and the electrolyte and effectively improving the cycle life of the battery. In addition, the introduction of the lithium-philic nanoparticles can further reduce the lithium metal loss during a cycling process and improve the coulombic efficiency after the initial cycling.

Besides, the lithium-philic nanoparticles covers a part of the surface of the negative electrode active substance, and the lithium-philic nanoparticles and the negative electrode active substance together form a lithium-philic composite material, such that the alloying effect, etc., of the lithium-philic nanoparticles can be effectively exerted, and also the negative electrode active substance can further effectively come into contact with lithium ions, a reversible de-intercalation effect of the negative electrode active substance on the lithium ions can be fully exerted, with a relatively small influence on the volume and the weight of the negative electrode plate, which can maintain a good energy density of the battery.

In some embodiments, the lithium-philic nanoparticles comprise a lithium-philic metal; and
optionally, the lithium-philic metal comprises one or more metals of the following group: Ag, In, Mg, Zn, Au and Sn, and an alloy of more of the foregoing metal elements.

In some embodiments, the lithium-philic metal comprises one or more metals of the following group: Ag, In and Mg, and an alloy of more of the foregoing metal elements; or,
the lithium-philic metal comprises one or more metals of the following group: Zn, Au and Sn, and an alloy of more of the foregoing metal elements.

The lithium-philic metal introduced in the present application can be alloyed with lithium, wherein Ag, In, Mg, etc., and alloys thereof can be alloyed with lithium by forming a solid solution, and Zn, Au, Sn, etc., and alloys thereof can be alloyed with lithium by forming an intermetallic compound. The lithium-philic substances which are easily alloyed can reduce the lithium precipitation overpotential in the electrode plate, reduce the reactivity between the negative electrode material and the electrolyte, effectively reduce the lithium metal loss, and improve the coulombic efficiency and the cycle life of the negative electrode after the initial cycling. On one hand, the lithium-philic nanoparticles can induce the deposition of the lithium metal in the electrode plate and inhibit expansion. On the other hand, the lithium-philic nanoparticles can regulate and control the uniform deposition of the lithium metal, and promote the formation of an artificially alloyed interface. After the artificial alloying interface is formed, the spatial uniformity of the deposition and stripping processes of lithium can be obviously improved, and the reactivity between the negative electrode plate material and the electrolyte solution can also be inhibited, thereby effectively reducing the lithium metal loss and improving the coulombic efficiency (generally, the coulombic efficiency after the initial cycling unless otherwise specified) and the cycle life of the negative electrode plate are improved. The lithium-philic nanoparticles (such as Ag) capable of reacting with lithium to form a solid solution can display high structural stability and excellent electrochemical performance. Further, compared with the lithium-philic nanoparticles (such as Au and Sn) which form an intermetallic compound with lithium, the lithium-philic nanoparticles alloyed by forming a solid solution are not influenced by lithium saturation, and have better structural stability and cycling performance.

In some embodiments, the Dₙ50 of the lithium-philic nanoparticles is ≤ 500 nm;
optionally, the Dₙ50 of the lithium-philic nanoparticles is selected from 10 nm-300 nm;
further optionally, the Dₙ50 of the lithium-philic nanoparticles is selected from 10 nm-200 nm;
more further optionally, the Dₙ50 of the lithium-philic nanoparticles is selected from 10 nm-100 nm;
more further optionally, the Dₙ50 of the lithium-philic nanoparticles is selected from 20 nm-100 nm;
additionally optionally, the Dn50 of the lithium-philic nanoparticles is selected from 5 nm-320 nm; and
additionally optionally, the Dn50 of the lithium-philic nanoparticles is selected from 5 nm-120 nm.

By reasonably controlling the size of the lithium-philic nanoparticles, not only a uniform lithium-philic coating can be obtained, but also the contact area between the lithium-philic nanoparticles and lithium can be increased, and lithium alloying can be promoted better.

In some embodiments, the negative electrode active material layer comprises an alloy formed by the lithium-philic nanoparticles and lithium.

The negative electrode plate of the first aspect is used to assemble a secondary battery. After the battery is used for a period of time, an alloy formed by the lithium-philic nanoparticles and lithium can be found in the negative electrode active material layer.

In some embodiments, the negative electrode active material layer comprises a lithium-philic composite layer, and the lithium-philic composite layer is a structural layer in which the lithium-philic nanoparticles are distributed in a thickness direction of the negative electrode active material layer.

In some embodiments, a part of the negative electrode active substance distributed in the lithium-philic composite layer is marked as a first negative electrode active substance,
wherein a mass percentage of the lithium-philic nanoparticles to the first negative electrode active substance is ≤ 6%; and
optionally, a mass percentage of the lithium-philic nanoparticles to the first negative electrode active substance is selected from 1%-5%.

In some embodiments, the sum of mass percentages of the lithium-philic nanoparticles and the first negative electrode active substance in the lithium-philic composite layer is ≥ 90%;
optionally, the sum of mass percentages of the lithium-philic nanoparticles and the first negative electrode active substance in the lithium-philic composite layer is ≥ 92%;
further optionally, the sum of mass percentages of the lithium-philic nanoparticles and the first negative electrode active substance in the lithium-philic composite layer is ≥ 94%; and
more further optionally, the sum of mass percentages of the lithium-philic nanoparticles and the first negative electrode active substance in the lithium-philic composite layer is ≥ 95%.

In some embodiments, the thickness of the lithium-philic composite layer is selected from 5 µm-150 µm;
further optionally, the thickness of the lithium-philic composite layer is selected from 20 µm-140 µm;
more further optionally, the thickness of the lithium-philic composite layer is selected from 20 µm-120 µm;
more further optionally, the thickness of the lithium-philic composite layer is selected from 20 µm-100 µm;
additionally optionally, the thickness of the lithium-philic composite layer is selected from 10 µm-150 µm;
additionally optionally, the thickness of the lithium-philic composite layer is selected from 10 µm-125 µm; and
additionally optionally, the thickness of the lithium-philic composite layer is selected from 10 µm-100 µm.

The content of the lithium-philic nanoparticles in the negative electrode active material layer can be reasonably controlled and the distribution of the lithium-philic nanoparticles in the negative electrode active material layer (which can be included on the surface of the negative electrode active framework) can be reasonably controlled by reasonably controlling the parameters such as the mass percentage of the lithium-philic nanoparticles relative to the first negative electrode active substance, the thickness of the lithium-philic composite layer (also marked as a first active layer), the sum of the mass percentages of the lithium-philic **nanoparticles** and the first negative electrode active substance, etc., such that the alloying between the lithium-philic nanoparticles and lithium can be effectively promoted, and lithium ions can also be well intercalated into and de-intercalated from the negative electrode active substance. Along with the increase of the content of the lithium-philic nanoparticles in the lithium-philic composite layer, the uniform dispersion of the lithium-philic nanoparticles in the whole three-dimensional space of the lithium-philic composite layer is favorably improved.

**In** some embodiments, the first negative electrode active substance comprises a carbon-based material;
optionally, the first negative electrode active substance comprises a graphitization-like material;
further optionally, the first negative electrode active substance comprises one or more of hard carbon and soft carbon; and
more further optionally, the first negative electrode active substance comprises hard carbon.

In some embodiments, in the lithium-philic composite layer, a mass percentage of the graphitization-like material in the first negative electrode active substance is ≥ 50%;
optionally, a mass percentage of the graphitization-like material in the first negative electrode active substance is selected from 80%-100%;
further optionally, a mass percentage of the graphitization-like material in the first negative electrode active substance is selected from 90%-100%; and
more further optionally, a mass percentage of the graphitization-like material in the first negative electrode active substance is selected from 95%-100%; and
more further optionally, a mass percentage of the graphitization-like material in the first negative electrode active substance is 100%.

When the negative electrode active substance (marked as the first negative electrode active substance) in the lithium-philic composite layer is a carbon-based material containing a graphitization-like material (such as at least one of hard carbon and soft carbon), a graphite-like microcrystal conductive structure can be used for providing a negative electrode lithium precipitation framework main body, and excessive lithium ions in a positive electrode are deposited in the negative electrode active material layer during a charging process (most of lithium is intercalated into the carbon-based host material, and a small part of lithium can be deposited on the negative electrode active framework), such that the lithium and the negative electrode active framework material together form a composite negative electrode, the cell expansion caused by lithium precipitation on the surface of the electrode plate is reduced, and the efficient utilization of the metal lithium is promoted. By using the composite negative electrode, the secondary battery can have good cycling performance, rate performance and safety. The graphitization-like material is further reasonably controlled to have a higher percentage, such that the effect is more obvious.

In some embodiments, in the lithium-philic composite layer, a mass percentage of the hard carbon in the first negative electrode active substance is ≥ 50%;
optionally, a mass percentage of the hard carbon in the first negative electrode active substance is selected from 80%-100%;
further optionally, a mass percentage of the hard carbon in the first negative electrode active substance is selected from 90%-100%;
more further optionally, a mass percentage of the hard carbon in the first negative electrode active substance is selected from 95%-100%; and
more further optionally, a mass percentage of the hard carbon in the first negative electrode active substance is 100%.

Compared with graphite, the hard carbon structure which is difficult to be completely graphitized at a high temperature (such as higher than 2,800°C) has the isotropic characteristic, and further has a delithiation potential similar to that of graphite and a higher specific capacity (such as 500-700 mAh/g). In addition, the hard carbon has more layered folds, can provide more lithium storage sites, has a larger interlayer spacing, is beneficial to rapidly diffusing lithium ions and keeping higher reversible capacity, can realize good battery cycling performance, is beneficial to realizing the good balance of improving overall energy density of a battery cell and increasing cycling stability, and can further improve the rate performance and safety of the battery. Further controlling the hard carbon to have a higher percentage in the first negative electrode active substance of the lithium-philic composite layer is more beneficial to achieving a higher reversible capacity.

In some embodiments, the negative electrode plate comprises a negative electrode current collector and the negative electrode active material layer is arranged on at least one side of the negative electrode current collector; and
the negative electrode active material layer further comprises a second active layer, the second active layer is arranged on the side, away from the negative electrode current collector, of the lithium-philic composite layer, the second active layer comprises a second negative electrode active substance, and the second active layer does not comprise the lithium-philic nanoparticles.

On the basis that lithium-philic nanoparticles in the lithium-philic composite layer (namely, the first active layer) can be alloyed with lithium, the second active layer which does not contain the lithium-philic nanoparticles is further arranged on the side, away from the negative electrode current collector, of the lithium-philic composite layer. When the second active layer is brought into a contact with an electrolyte, a compact solid electrolyte interface (SEI) film can be formed, which can induce the uniform deposition of lithium metal, reduce the deposition expansion, and reduce the lithium dendrites. The second active layer can further be used as a guiding layer to induce a part of precipitated lithium to be uniformly and compactly precipitated on the surface of the electrode plate, thereby improving the stability of the solid electrolyte interface (SEI) film. In such a case, the negative electrode active material layer has a double-layer structure, and there is a synergistic induced deposition of lithium by the lithium-philic nanoparticles in the first active layer, and the second active layer.

In some embodiments, the second negative electrode active substance comprises a graphitization-like material; and
optionally, the second negative electrode active substance comprises soft carbon.

In some embodiments, in the second active layer, a mass percentage of the soft carbon in the second negative electrode active substance is ≥ 50%;
optionally, a mass percentage of the soft carbon in the second negative electrode active substance is selected from 80%-100%;
further optionally, a mass percentage of the soft carbon in the second negative electrode active substance is selected from 90%-100%;
more further optionally, a mass percentage of the soft carbon in the second negative electrode active substance is selected from 95%-100%; and
more further optionally, a mass percentage of the soft carbon in the second negative electrode active substance is 100%.

In the present application a double-layer coating structure design of "lower-layer lithium-philic + upper-layer graphitization-like material" is further proposed. In such a case, the negative electrode active substance (i.e., the second negative electrode active substance) in the second active layer comprises a graphitization-like material. When the second active layer contains hard carbon, it is beneficial to realizing a higher reversible capacity. When the second active layer contains soft carbon, the soft carbon has a high graphitization degree, few microstructure defects, and when the second active layer is brought into a contact with the electrolyte, the lithium metal can be induced to be uniformly deposited to form a compact SEI film, the deposition expansion is reduced, and the lithium dendrites are reduced. When the percentage of the soft carbon in the second negative electrode active substance is relatively high, it is more beneficial to promoting the uniform deposition of the lithium.

In some embodiments, the thickness of the second active layer is smaller than that of the lithium-philic composite layer;
optionally, the thickness of the second active layer is selected from 5 µm-25 µm;
further optionally, the thickness of the second active layer is selected from 10 µm-20 µm;
additionally optionally, the thickness of the second active layer is selected from 8 µm-22 µm; and
additionally optionally, the thickness of the second active layer is selected from 8 µm-12 µm.

In the present application, when the thickness of the second active layer is smaller than that of the first active layer (such as 5 µm-15 µm, further about 10 µm), it is possible to induce the uniform deposition of the lithium and further reasonably adjust the transmission efficiency of the lithium ions between the lithium-philic composite layer (the first active layer) and the electrolyte. In addition, when the active substance of the second negative electrode active material layer contains soft carbon, although the capacity per gram of the soft carbon is relatively low (such as 150-200 mAh/g), the second active layer can be used as a deposition inducing layer of a lithium precipitation part to promote the formation of a relatively complete SEI film. By utilizing the compound regulation and control of the lithium precipitation process by the lithium-philic nanoparticles and the second active layer, the lithium precipitation part can be deposited more uniformly and compactly, such that the coulombic efficiency and the cycle life of the negative electrode can be effectively improved. The second active layer is further regulated and controlled to have a reasonable thickness, such that a good balance of improving the overall energy density of the battery cell and increasing the cycling stability can be realized. If the second active layer is too thick, it may affect the conduction of the lithium ions between the lithium-philic composite layer (first active layer) and the electrolyte solution.

In a second aspect, the present application provides a secondary battery comprising a positive electrode plate, a separator, and a negative electrode plate according to the first aspect of the present application, wherein the separator is positioned between the positive electrode plate and the negative electrode plate.

The negative electrode plate according to the first aspect of the present application is used to prepare a secondary battery. Alloying of the lithium-philic nanoparticles in the lithium-philic composite layer and lithium can be utilized. The reactivity between the negative electrode material and the electrolyte after the lithium alloying can be obviously reduced, thereby inducing the deposition of the lithium metal inside and on the surface of the electrode plate, reducing the problem of high charging expansion caused by the lithium precipitation inside and on the surface, further reducing the loss of the lithium metal, and effectively improving the coulombic efficiency of the negative plate and the cycle life of the battery.

In some embodiments, a CB value of the secondary battery is less than 1;
optionally, a CB value of the secondary battery is selected from 0.1-0.9; and
optionally, a CB value of the secondary battery is selected from 0.15-0.9,
wherein the side, facing the positive electrode plate, of the negative electrode plate comprises the negative electrode active material layer, the side, facing the negative electrode plate, of the positive electrode plate comprises a positive electrode active material layer, and the CB value is a capacity ratio of the negative electrode active material layer to the positive electrode active material layer which are oppositely arranged under the same area.

The present application further provides a design of a lithium-philic modified negative electrode of a low CB system, which can give consideration to both the high energy density and cycling stability. In the present application, for the design of the battery cell with a CB value less than 1, the lithium-philic nanoparticles can be alloyed with the lithium in a charging process, such that the stability of the lithium metal is improved, the lithium metal can further be induced to be uniformly deposited inside the negative electrode plate (which can be included on a negative electrode active framework), such that the lithium and the negative electrode active framework material jointly form a composite negative electrode, the lithium deposition is effectively regulated and controlled, and the good balance of improving the overall energy density of the battery cell and increasing the cycling stability can be better achieved. When the CB value is less than 1, the use of the lithium-philic nanoparticles in the negative electrode active material layer allows a part of precipitated lithium metal to be uniformly deposited inside the negative electrode active material layer, such that the expansion of the electrode plate is reduced. When the lithium-philic nanoparticles are distributed on the surfaces of at least some negative electrode active substances, the lithium-philic nanoparticles can induce the lithium metal to be uniformly deposited on the negative electrode active framework, and the expansion of the electrode plate is reduced. In addition, when the negative electrode plate is provided with the second active layer, the second active layer can be used as a guiding layer to induce another part of precipitated lithium to be uniformly and compactly precipitated on the surface of the electrode plate. In such a case, most lithium can be stored in the active material layer, only a small part of lithium is in a lithium metal precipitation state, and the lithium dendrite problem is obviously alleviated.

In some embodiments, the secondary battery is a lithium-ion secondary battery;
further, the positive electrode plate comprises a positive electrode active substance;
further optionally, the positive electrode active substance comprises a lithium-ion material, wherein the lithium-ion material comprises one or more of the following substances: a lithium-containing phosphate, a lithium transition metal oxide, and a substance composed of any of the foregoing substances and a doping element; and
optionally, the positive electrode active substance comprises one or more of the following substances: lithium iron phosphate, lithium manganese iron phosphate, a lithium cobalt oxide, a lithium nickel oxide, a lithium manganese oxide, a lithium nickel manganese oxide, a lithium nickel cobalt manganese oxide, and a lithium nickel cobalt aluminum oxide, and a substance composed of any of the foregoing substances and a doping element,
wherein the doping element in any one of the positive electrode active substances independently comprises one or more of a transition metal element and a non-transition metal element.

Active ions of the lithium-ion secondary battery comprise lithium ions. The negative electrode plate of the present application can comprise the lithium-philic nanoparticles to regulate and control the lithium deposition process to inhibit the reactivity between the negative electrode material and the electrolyte solution, reduce the lithium metal loss in the cycling process, and effectively improve the coulombic efficiency of the negative plate and the cycle life of the battery.

**In** a third aspect, the present application provides a power consuming device, comprising at least one of a negative electrode plate according to the first aspect of the present application and a secondary battery according to the second aspect of the present application.

The power consuming device prepared by using at least one of the negative electrode plate according to the first aspect of the present application and the secondary battery according to the second aspect of the present application can utilize the alloying of the lithium-philic nanoparticles in the lithium-philic composite layer and lithium, thereby inhibiting the reactivity between the negative electrode material and the electrolyte solution, regulating and controlling the lithium deposition process, effectively improving the coulombic efficiency of the negative electrode and the cycle life of the battery, and prolonging the service life of the power consuming device.

In a fourth aspect, the present application provides a method for preparing a negative electrode plate, comprising the following steps:
preparing a first negative electrode slurry comprising a first negative electrode active substance and lithium-philic nanoparticles, wherein the lithium-philic nanoparticles is as defined according to the first aspect of the present application;
coating the first negative electrode slurry onto at least one surface of a negative electrode substrate, and drying same to form a lithium-philic composite layer to prepare a lithium-philic substrate;
cold-pressing the lithium-philic substrate to prepare a negative electrode plate; or coating a second negative electrode slurry containing a second negative electrode active substance onto a surface of one side, comprising the lithium-philic composite layer, of the lithium-philic substrate, drying and cold-pressing same to form a second active layer, and preparing a negative electrode plate.

A dispersion containing the lithium-philic nanoparticles is introduced into the negative electrode slurry, the lithium-philic nanoparticles are uniformly dispersed in the negative electrode slurry, and further coating, drying etc., are conducted to gather the lithium-philic nanoparticles on a negative electrode substrate to form a lithium-philic composite layer. The lithium-philic composite layer can be directly used as a surface layer in the negative electrode plate in contact with an electrolyte solution, and a second active layer (not lithium-philic) can be further laminated, such that the double-layer coating structure of "lower-layer lithium-philic + upper-layer non-lithium-philic" is obtained.

In some embodiments, the step of preparing the first negative electrode slurry comprises mixing the first negative electrode active substance and a dispersion containing the lithium-philic nanoparticles, wherein the concentration of the lithium-philic nanoparticles in the dispersion is selected from 100 µg/L-1,000 µg/L;
optionally, the concentration of the lithium-philic nanoparticles in the dispersion is selected from 200 µg/L-800 µg/L; and
optionally, the concentration of the lithium-philic nanoparticles in the dispersion is selected from 400 µg/L-500 µg/L.

By reasonably controlling the concentration of the lithium-philic nanoparticles in the dispersion, the distribution concentration of the lithium-philic nanoparticles in the negative electrode slurry can be better adjusted, such that after coating and drying, the lithium-philic nanoparticles are reasonably distributed in the negative electrode active material layer (including on the surface of the negative electrode active framework), the lithium can be effectively induced to be uniformly deposited and an artificially alloyed interface is formed, and at the same time, a better lithium-ion intercalation/de-intercalation rate is also kept.

In some embodiments, any one or more of the following features are satisfied:
the step of preparing the first negative electrode slurry further comprises adding a conductive agent, a binder, and a solvent;
the first negative electrode active substance in the first negative electrode slurry is defined in accordance with the first negative electrode active substance in the lithium-philic composite layer according to the first aspect of the present application;
the second negative electrode active substance in the second negative electrode slurry is defined in accordance with the second negative electrode active substance in the second active layer according to the first aspect of the present application; and
the negative electrode plate is as defined in the first aspect of the present application.

The negative electrode plate of the first aspect of the present application can be prepared by the preparation method of the second aspect.

In some embodiments, the dispersion is prepared by using a method comprising the following steps:
preparing a mixed solution containing a metal precursor, a reducing agent and optionally a dispersant, wherein the metal precursor comprises a salt-type precursor of the lithium-philic nanoparticles; and
subjecting the mixed solution to a reduction reaction to convert the salt-type precursor into the lithium-philic nanoparticles.

Details of one or more examples of the present application will be provided in the following accompanying drawings and description. Other features, objectives and advantages of the present application will become obvious from the description, accompanying drawings and claims.

### Brief Description of the Drawings

In order to better describe and illustrate those embodiments or examples of the present application disclosed herein, reference can be made to one or more accompanying drawings. The additional details or examples used to describe the accompanying drawings should not be considered as limiting the scope of any of the disclosed application, the embodiments or examples currently described, and these best modes of the present application currently understood. Moreover, like components are denoted by like reference numerals throughout the accompanying drawings. In the drawings:
Fig. 1 is a structural schematic diagram of a negative electrode active material layer in a negative electrode plate according to an embodiment of the present application;
Fig. 2 shows a structural schematic diagram of a negative electrode plate in an embodiment of the present application, wherein the negative electrode active material layer of the negative electrode plate is a lithium-philic composite layer of a single-layer structure;
Fig. 3 shows a structural schematic diagram of a negative electrode plate in an embodiment of the present application, wherein the negative electrode active material layer of the negative electrode plate has a double-layer structure comprising a lithium-philic composite layer (also marked as a first active layer) and a second active layer;
Fig. 4 shows scanning electron microscope (SEM) images of side cross sections of lithium precipitation layers of example 1 and comparative example 1 of the present application, wherein the left side is comparative example 1 and the right side is example 1, "~18 µm" in comparative example 1 means about 18 µm, and "~2 µm" in example 1 means about 2 µm;
Fig. 5 shows a comparison graph of expansion performance of the negative electrode plates of example 1 and comparative example 1 of the present application, wherein the y-axis represents a thickness of the negative electrode plate;
Fig. 6 shows a schematic diagram of a secondary battery according to an example of the present application;
Fig. 7 shows an exploded view of the secondary battery according to an example of the present application as shown in Fig. 6; and
Fig. 8 shows a schematic diagram of a power consuming device using the secondary battery according to an example of the present application as a power source.

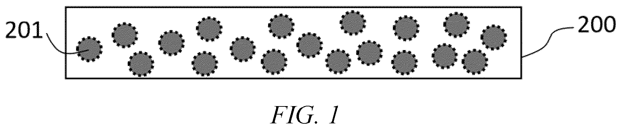

Description of reference signs:
200, negative electrode active material layer; 201, lithium-philic active particle; 210, lithium-philic composite layer (also marked as first active layer) 220, second active layer; 100, negative electrode substrate, wherein it is to be understood that, in Figs. 1-3, the shape, size, distribution density and distribution mode of the lithium-philic active particles, the relative sizes and contents, and other parameters of the negative electrode active substance and the lithium-philic nanoparticles are illustrative and nonrestrictive, and those parameters in the present application are not limited thereto;
5, secondary battery; 51, housing; 52, electrode assembly; 53, cover plate; 6, power consuming device; .

### Detailed Description of Embodiments

Hereinafter, some embodiments of the negative electrode plate, the secondary battery, the power consuming device, the method, and the use of the present application disclosed in detail with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The value "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, the reference to "the method may further include step (c)" indicates that step (c) may be added to the method in any order, e.g., the method may include steps (a), (b) and (c), also steps (a), (c) and (b), or further steps (c), (a) and (b).

The terms "have", "comprise", "contain" and "include" mentioned in the present application are open-ended or may also be closed-ended each independently, unless otherwise stated. For example, the "have", "comprise", "contain" and "include" may mean that: other components not listed may further be comprised or included, or only the listed components may be comprised or included.

In the present application, the term "or" is inclusive unless otherwise specified. For example, the phrase "A or B" means "A, B, or both A and B". Further, the condition "A or B" is satisfied by any one of the following: A is true (or present) and B is false (or not present); A is false (or not present) and B is true (or present); or both A and B are true (or present).

The present application involves the expressions of "a plurality of", "various", "multiple", etc., which refer to a quantity more than or equal to 2, unless otherwise specified. For example, "one or more" denotes one or more than or equal to two.

As used herein, the expressions "a combination thereof", "any combination thereof", "any combination manner thereof", etc. include all suitable combination manners of any two or more of the listed items.

Herein, the "suitable" in expressions such as "a suitable combination manner", "a suitable manner", and "any suitable manner" denotes that the technical solutions capable of implementing the present application shall prevail.

Herein, the expressions "preferably", "better", "superior", and "appropriately" are used only to describe an embodiment or example having a better effect, and it should be understood that such expressions do not constitute any limitation to the scope of protection of the present application. If there are multiple "preferably" in a technical solution, in the case of no contradictions or mutual constraints, each "preferably" is independent, unless otherwise stated.

In the present application, the expressions such as "further", "more further", and "particularly" are used for descriptive purpose to illustrate the differences of different technical solutions in content, but should not be construed as limiting the scope of protection of the present application.

In the present application, in the expressions such as "a first aspect", "a second aspect", "a third aspect" and "a fourth aspect", the terms "first", "second", "third", and "fourth" are used for descriptive purposes only and cannot be construed as indicating or implying the relative importance or quantities, and also cannot be construed as implicitly indicating the importance or quantity of the technical features indicated. Moreover, the terms "first", "second", "third", and "fourth" are used for purposes of non-exhaustive recitation and description only and it should be understood that same does not constitute the closed-ended limitation on quantities.

In the present application, the term "room temperature" or "normal temperature" generally denotes 4°C-35°C, preferably 20°C ± 5°C. In some examples of the present application, the room temperature or normal temperature denotes 20°C-30°C.

In the present application, if an unit involved in an numerical range only appears after the right endpoint value, it means that the units of the left endpoint value and the right endpoint value are the same. For example, 3-5 h denotes that the units of both the left endpoint value of "3" and the right endpoint value of "5" are h (hour).

The weights of relative components mentioned in the description of an embodiment of the present application can not only indicate the contents of the components, but also can denote the proportional relation of the weights of the components. Therefore, the contents of relative components scaled up or down in accordance with those defined in the description of the embodiment of the present application fall within the scope disclosed in the description of the embodiment of the present application. Further, the unit of the weight involved in the description of the examples of the present application may be those well-known in the chemical industry, such as µg, mg, g, and kg.

With regard to the negative electrode active substance, the traditional graphite material has the advantages of good conductivity, high initial-cycle coulombic efficiency etc. However, since the capacity per gram of the graphite is relatively low (generally, the theoretical value is about 372 mAh/g, the actual value often cannot reach the theoretical value), the energy density of the lithium-ion battery is limited. Besides, the rate performance of the graphite material is also restricted by lithium diffusion between graphite layers, such that the continuous large-current discharge capability required by a large-scale power battery cannot be met. Compared with the graphite material, hard carbon has a higher capacity per gram, but has the defects of insufficient lithium storage space, low initial-cycle coulombic efficiency etc., and is still difficult to meet the design requirement (such as 400 Wh/kg) for high energy density.

Besides, although a metal lithium negative electrode has an extremely high specific capacity (3,860 mAh/g) and an extremely low electrode potential (-3.04 V, relative to the standard hydrogen electrode potential), the metal lithium negative electrode is accompanied by a huge electrode volume change, repeated growth of an SEI film, and formation of metal lithium dendrites during a charging and discharging process, the dendrite growth problem is very serious, a large amount of dead lithium is easily and rapidly generated, and the cycle life of the metal lithium battery is seriously limited. Therefore, it is highly desirable to stably reduce the generation of dead lithium in the lithium metal negative electrode. These problems cause rapid deterioration of the battery capacity and even internal short circuits.

Therefore, it is difficult to improve a cycling performance (e.g., a cycle life) while satisfying certain energy density requirements.

In view of the common technical problems, **in a first aspect,** the present application provides a negative electrode plate, comprising a negative electrode active material layer, wherein the negative electrode active material layer comprises a negative electrode active substance and lithium-philic nanoparticles capable of alloying with lithium.

In the present application, unless otherwise stated, the electrode plate may be a positive electrode plate or a negative electrode plate. The "active substance" in the electrode plate refers to a substance capable of reversibly intercalating and de-intercalating lithium ions. Unless otherwise stated, the "negative electrode active substance" refers to a substance capable of reversibly intercalating and de-intercalating lithium ions, which is used for a negative electrode plate; and unless otherwise stated, the "positive electrode active substance" refers to a substance capable of reversibly de-intercalating and intercalating lithium ions, which is used for a positive electrode plate. When the secondary battery is charged, the lithium ions are de-intercalated from the positive electrode and intercalated into the negative electrode through the electrolyte; and when the secondary battery is discharged, the lithium ions are de-intercalated from the negative electrode and intercalated into the positive electrode.

In the present application, the "negative electrode active substance" has the same meaning as the "negative electrode active material", and the two words may be used interchangeably; and the "positive electrode active substance" has the same meaning as the "positive electrode active material", and the two words may be used interchangeably.

In the present application, unless otherwise stated, the "active material layer" comprises the positive electrode active material layer of the positive electrode plate and the negative electrode active material layer of the negative electrode plate, and may refer to the positive electrode active material layer or the negative electrode active material layer according to the detailed case. It can be understood that the positive electrode active material layer contains the positive electrode active substance, and the negative electrode active material layer contains the negative electrode active substance.

In the present application, the "lithium-philic nanoparticles" belong to a lithium-philic substance and refers to nanoparticles capable of alloying with lithium, wherein the "lithium-philic" refers to a property capable of alloying with lithium; and the "lithium-philic substance" refers to a substance capable of alloying with lithium, and a lithium-containing alloy can be obtained after alloying with lithium. The size of the lithium-philic nanoparticles may be as defined below. In the present application, the principle of alloying with lithium may include, but is not limited to, formation of a solid solution with lithium and formation of an intermetallic compound with lithium. In the present application, unless otherwise stated, the lithium-philic substance contains a lithium-philic metal element, wherein the metal element may be a metal element or a metal alloy. In the negative electrode active material of the negative electrode plate, interparticle aggregation may or may not occur between the lithium-philic nanoparticles.

The lithium-philic nanoparticles capable of alloying with lithium is introduced into the negative electrode active material layer of the negative electrode plate. The lithium-philic nanoparticles can provide a lower nucleation overpotential, induce the lithium to be uniformly deposited in the negative electrode plate, also reduce a lithium precipitation overpotential in the electrode plate, and inhibit the reactivity between the negative electrode material and the electrolyte, so as to effectively improve the cycling performance (such as cycle life) of the battery.

In some embodiments, the lithium-philic nanoparticles in the negative electrode plate may be distributed on a surface of the negative electrode active substance.

In the present application, particles composed of the negative electrode active substance having the lithium-philic nanoparticles distributed on the surface thereof may be referred to as a "lithium-philic active particle". Unless otherwise stated, in the lithium-philic active particle, the lithium-philic nanoparticles are distributed on a part of the surface of the negative electrode active substance, such that the negative electrode active substance can further effectively come into contact with lithium ions.

In one embodiment shown in Fig. 1, the negative electrode active material layer 200 of the negative electrode plate comprises lithium-philic active particles 201 therein. It can be understood that in Fig. 1, the shape, size, distribution density and distribution mode of the lithium-philic active particles, the relative sizes and contents, and other parameters of the negative electrode active substance and the lithium-philic nanoparticles are illustrative and nonrestrictive.

In some embodiments, at least a part of the lithium-philic nanoparticles are distributed on a part of a surface of the negative electrode active substance. In such a case, at least a part of the negative electrode active substance is modified by lithiophilization and exists in the form of the lithium-philic active particle.

In the negative electrode plate, the negative electrode active substance forms a negative electrode active framework. When at least a part of the lithium-philic nanoparticles are distributed on the surface of a part of the negative electrode active substance, namely the lithium-philic nanoparticles capable of alloying with lithium are introduced on the surface of the negative electrode active framework. The characteristic that the lithium-philic nanoparticles can be alloyed with the lithium and provide a lower nucleation overpotential, is used so as to reduce a lithium precipitation overpotential in the electrode plate, and induce the uniform deposition of the lithium on the negative electrode active framework, thereby forming an artificial alloying interface, inhibiting the reactivity between the negative electrode material and the electrolyte and effectively improving the cycle life of the battery. In addition, the introduction of the lithium-philic nanoparticles can further reduce the lithium metal loss during a cycling process and improve the coulombic efficiency after the initial cycling.

In the present application, unless otherwise stated, the "initial-cycle coulombic efficiency" refers to a ratio of the discharge capacity to the charge capacity of a lithium-ion battery in the initial charge-discharge cycle, and may be numerically equal to the percentage obtained by dividing the discharge capacity by the charge capacity.

In the present application, unless explicitly specified as the "initial-cycle coulombic efficiency", whenever the "coulombic efficiency" is referred to, unless otherwise stated, the coulombic efficiency of a cycling process after the initial cycling. Generally, the higher the coulombic efficiency during the cycling process after the initial cycling, the longer the cycle life, and correspondingly, the higher the number of cycles completed when the capacity is faded to a certain value. Similarly, the longer the cycle life or the more cycles completed when the capacity is faded to a certain value, generally the higher the coulombic efficiency.

Besides, the lithium-philic nanoparticles covers a part of the surface of the negative electrode active substance, and the lithium-philic nanoparticles and the negative electrode active substance together form a lithium-philic composite material. In such a case, the alloying effect etc., of the lithium-philic nanoparticles can be effectively exerted, the negative electrode active substance can further effectively come into contact with lithium ions, a reversible de-intercalation effect of the negative electrode active substance on the lithium ions can be fully exerted, with a relatively small influence on the volume and the weight of the negative electrode plate, which can maintain a good energy density of the battery.

In the present application, unless otherwise stated, the "negative electrode active framework" refers to a three-dimensional structure containing the negative electrode active substance and having interconnected pores inside. In some embodiments, the material component of the negative electrode active framework contains a carbon-based material, and may be a carbon-based material, and may further be a composite material composed of a carbon-based material and a non-carbon-based material, such as a carbon-silicon composite material. A weight percentage of the carbon-based material in the negative electrode active framework may be ≥ 50%, may further be selected from ranges of 50%-100%, 55%-100%, 60%-100%, 70%-100%, 80%-100%, 90%-100% etc., and may further be selected from the numerical value ranges composed of any one or two of the following percentages: 50%, 55%, 60%, 65%, 70%, 75%, 80%, 85%, 90%, 95%, 100%, etc. When the weight percentage of the carbon-based material in the negative electrode active framework is 100%, it means that the negative electrode active framework is entirely composed of the carbon-based material. The carbon-based material that can be used for the negative electrode plate of the present application may include one or more of graphite (further including synthetic graphite and natural graphite), soft carbon, and hard carbon. The non-carbon-based material that can be used in the negative electrode plate of the present application may include, but is not limited to, the carbon-based material. The silicon-based material may be selected from one or more of elemental silicon, a silicon oxide compound, a silicon carbon composite, a silicon nitrogen composite, and a silicon alloy. The present application is not limited to the materials or substances listed above, but other traditional materials or substances that can be used as the negative electrode active substance for a battery may further be used. These negative electrode active materials or substances may be used either alone or in combination with two or more of them, such as a combination of hard carbon and soft carbon, a combination of hard carbon and graphite, a combination of hard carbon and a silicon-based material, etc.

In the present application, unless otherwise stated, the "lithium-philic composite material" is a composite material comprising the negative electrode active substance and the lithium-philic nanoparticles. It can be understood that materials comprising the lithium-philic active particle are within the scope of the lithium-philic composite material of the present application. An active structure layer containing the lithium-philic composite material in the negative electrode active material layer corresponds to the "lithium-philic composite layer" and is also marked as the "first active layer" in the present application. The "negative electrode active substance" in the lithium-philic composite layer is also marked as a first negative electrode active substance. In the present application, the first negative electrode active substance may include a carbon-based material (optionally, may be a carbon-based material), and non-limiting examples may include one or more of hard carbon, soft carbon, etc. Due to the alloying effect between the lithium-philic nanoparticles and lithium, the lithium can be uniformly deposited on the surface of the negative electrode active framework to form an artificially alloyed interface. Besides, the artificially alloyed interface further allows reversible delithiation and dealloying, such that a part of the negative electrode active material layer has the double advantages of high cycling stability of a carbon-based negative electrode and high energy density of a lithium metal negative electrode. In addition, the use of the alloying effect of the lithium-philic nanoparticles and the effect of inducing the lithium to be uniformly deposited inside the electrode plate, can reduce the expansion of a battery cell, reduce the generation of lithium dendrites, and also reduce the generation of dendrites and then prevent the dendrites from being broken to form dead lithium, as well as reduce the lithium metal loss in the cycling process, improve the coulombic efficiency, and prolong the cycle life.

In some embodiments, the lithium-philic nanoparticles comprise a lithium-philic metal.

In the present application, unless otherwise stated, the "lithium-philic metal" refers to a metal having a lithium-philic property, and may be a metal element or an alloy.

In some embodiments, the lithium-philic metal comprises one or more metals of the following group: Ag, In, Mg, Zn, Au and Sn, and an alloy of more of the foregoing metal elements.

In some embodiments, the lithium-philic metal comprises one or more metals of the following group: Ag, In and Mg, and an alloy of more of the foregoing metal elements.

In some other embodiments, the lithium-philic metal comprises one or more metals of the following group: Zn, Au and Sn, and an alloy of more of the foregoing metal elements.

The lithium-philic metal introduced in the present application can be alloyed with lithium, wherein Ag, In, Mg, etc., and alloys thereof can be alloyed with lithium by forming a solid solution, and Zn, Au, Sn, etc., and alloys thereof can be alloyed with lithium by forming an intermetallic compound. This easily alloyed lithium-philic substance can reduce the lithium precipitation overpotential in the electrode plate, reduce the reactivity between the negative electrode material and the electrolyte, effectively reduce the lithium metal loss, and improve the coulombic efficiency and cycle life of the negative electrode. On one hand, the lithium-philic nanoparticles can induce the deposition of the lithium metal in the electrode plate and inhibit expansion. On the other hand, the lithium-philic nanoparticles can regulate and control the uniform deposition of the lithium metal, and promote the formation of an artificially alloyed interface. After the artificially alloyed interface is formed, the spatial uniformity during the deposition and stripping processes of lithium can be obviously improved, and the reactivity between the negative electrode plate material and the electrolyte solution can also be inhibited, thereby effectively improving the coulombic efficiency of the negative electrode plate and the cycle life of the battery. The lithium-philic nanoparticles (such as Ag) capable of reacting with lithium to form a solid solution can display high structural stability and excellent electrochemical performance. Further, compared with the lithium-philic nanoparticles (such as Au and Sn) which form an intermetallic compound with lithium, the lithium-philic nanoparticles alloyed by forming a solid solution are not influenced by lithium saturation, and have better structural stability and cycling performance.

In some embodiments, Dₙ50 of the lithium-philic nanoparticles ≤ 500 nm, Dₙ50 may also be ≤ 400 nm, Dₙ50 may further also be ≤ 350 nm, Dₙ50 may more further also be ≤ 300 nm, Dₙ50 may more further also be ≤ 250 nm, Dₙ50 may more further also be ≤ 200 nm, Dₙ50 may more further also be ≤ 150 nm, Dₙ50 may also be ≤ 120 nm, Dₙ50 may also be ≤ 100 nm, and Dₙ50 may also be ≤ 40 nm. Besides, Dₙ50 of the lithium-philic nanoparticles may be ≥ 5 nm, also ≥ 10 nm, further also ≥ 15 nm, and more further also ≥ 20 nm. Dₙ50 of the lithium-philic nanoparticles may also be selected from any of the following sizes: 5 nm, 6 nm, 8 nm, 10 nm, 12 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 110 nm, 120 nm, 125 nm, 150 nm, 200 nm, 220 nm, 250 nm, 300 nm, 320 nm, 350 nm, 400 nm, etc., and may also be selected from the range consisting of any two sizes mentioned above. For example, Dₙ50 may also be selected from any suitable range of 5 nm-500 nm, 5 nm-450 nm, 5 nm-400 nm, 5 nm-320 nm, 5 nm-300 nm, 5 nm-250 nm, 5 nm-200 nm, 5 nm-150 nm, 5 nm-120 nm, 5 nm-100 nm, 10 nm-500 nm, 10 nm-450 nm, 10 nm-400 nm, 10 nm-300 nm, 10 nm-250 nm, 10 nm-200 nm, 10 nm-150 nm, 10 nm-120 nm, 10 nm-100 nm, 10 nm-40 nm, 20 nm-500 nm, 20 nm-450 nm, 20 nm-400 nm, 20 nm-300 nm, 20 nm-250 nm, 20 nm-200 nm, 20 nm-250 nm, 20 nm-120 nm, 20 nm-100 nm, etc.

In the present application, unless otherwise stated, Dₙ50 refers to the particle size corresponding to the cumulative number distribution percentage of a particle mixture reaching 50%. The parameter indicates that particles accounting for 50% of the number of the particles have a particle size less than or equal to Dₙ50, and particles accounting for 50% of the number of the particles have a particle size greater than Dₙ50. A person skilled in the art could understand the meanings of Dₙ50 which can determined by means of an instrument and a method well-known in the art. For example, it can be conveniently measured with a laser particle size analyzer, such as Mastersizer 2000E laser particle size analyzer from Malvern Instruments Co., Ltd., UK, and a LS-909 laser particle size analyzer (OMEC), with reference to GB/T19077-2016 Particle Size Distribution-Laser Diffraction Method. In addition, it should also be noted that "Dₙ50 of the lithium-philic nanoparticles" refers to the size of single particle units in a single particle which has not agglomerated or a multiparticulate agglomerate.

By reasonably controlling the size of the lithium-philic nanoparticles, not only a uniform lithium-philic coating can be obtained, but also the contact area between the lithium-philic nanoparticles and lithium can be increased, and lithium alloying can be promoted better. As the particle size increases, when the same mass of the lithium-philic nanoparticles are deposited, a reduced number of lithium-philic sites are formed. When the size of the lithium-philic nanoparticles is relatively large (such as more than 500 nm), larger deposition uniformity on the carbon-based active framework may be resulted in.

In some embodiments, the negative electrode active material layer comprises an alloy formed by the lithium-philic nanoparticles and lithium.

The negative electrode plate of the first aspect is used to assemble a secondary battery. After the battery is used for a period of time, an alloy formed by the lithium-philic nanoparticles and lithium can be found in the negative electrode active material layer. The alloy can be detected and identified by elemental analysis methods of metals and alloys thereof commonly used in the art (such as XRD is used to analyze alloy phase composition). In addition, the morphology and the element composition of the lithium-philic alloy substance can be further detected through a scanning electron microscope (SEM) and an energy-dispersive spectrometer (EDS) equipped with the SEM.

In some embodiments, the negative electrode active material layer comprises a lithium-philic composite layer.

In the present application, unless otherwise stated, the lithium-philic composite layer is a structural layer in which the lithium-philic nanoparticles are distributed in a thickness direction of the negative electrode active material layer. It can be understood that the lithium-philic composite layer contains the lithium-philic composite material. The distribution of the lithium-philic nanoparticles in the lithium-philic composite layer may be uniform or also non-uniform. When the lithium-philic nanoparticles are non-uniformly distributed in the lithium-philic composite layer, for example, variations in the distribution concentration in at least one of a longitudinal direction (a thickness direction of the electrode plate) and a transverse direction (a direction parallel to the electrode plate surface) are allowed. In some preferred examples, for a given thickness position, the lithium-philic nanoparticles are substantially uniformly distributed along the transverse direction of the negative electrode plate, i.e., there is no significant difference in the distribution concentration along the transverse direction at the given thickness position (such as no significant difference at a level ofp < 0.05).

Figs. 1, 2, and 3 each provide an example of a lithium-philic composite layer, in which the lithium-philic composite layer comprises lithium-philic active particles, and thus comprises lithium-philic nanoparticles distributed on the surface of the negative electrode active substance. It can be understood that the parameters of the size, content, shape, distribution, etc. of the lithium-philic nanoparticles in Figs. 1-3 are illustrative and nonrestrictive.

In the present application, unless otherwise stated, a part of the negative electrode active substance distributed in the lithium-philic composite layer is marked as "a first negative electrode active substance".

In some embodiments, a mass percentage of the lithium-philic nanoparticles to the first negative electrode active substance is ≤ 6%. A mass percentage of the lithium-philic nanoparticles to the first negative electrode active substance may also be selected from any of the following percentages or the range consisting of any two of the following percentages: 1%, 1.5%, 2%, 2.5%, 3%, 3.5%, 4%, 4.5%, 5%, etc. In some embodiments, a mass percentage of the lithium-philic nanoparticles to the first negative electrode active substance is selected from 1%-5%.

In some embodiments, the sum of mass percentages of the lithium-philic nanoparticles and the first negative electrode active substance in the lithium-philic composite layer is ≥ 90%. The sum of mass percentages of the lithium-philic nanoparticles and the first negative electrode active substance in the lithium-philic composite layer may also be selected from any of the following mass percentages or the range consisting of any two of the following mass percentages: 90%, 91%, 92%, 93%, 94%, 95%, 96%, 97%, 98%, etc. In some embodiments, the sum of mass percentages of the lithium-philic nanoparticles and the first negative electrode active substance in the lithium-philic composite layer is ≥ 92%. In some embodiments, the sum of mass percentages of the lithium-philic nanoparticles and the first negative electrode active substance in the lithium-philic composite layer is ≥ 94%. In some embodiments, the sum of mass percentages of the lithium-philic nanoparticles and the first negative electrode active substance in the lithium-philic composite layer is ≥ 95%.

In some embodiments, the thickness of the lithium-philic composite layer is selected from 5 µm-150 µm. The thickness of the lithium-philic composite layer may also be selected from any of the following thickness or the range consisting of any two of the following thickness: 5 µm, 6 µm, 7 µm, 8 µm, 9 µm, 10 µm, 12 µm, 15 µm, 20 µm, 25 µm, 30 µm, 35 µm, 40 µm, 45 µm, 46 µm, 47 µm, 48 µm, 49 µm, 50 µm, 51 µm, 52 µm, 53 µm, 54 µm, 55 µm, 60 µm, 65 µm, 70 µm, 75 µm, 80 µm, 85 µm, 90 µm, 95 µm, 100 µm, 110 µm, 115 µm, 120 µm, 125 µm, 130 µm, 140 µm, etc. In some embodiments, the thickness of the lithium-philic composite layer may be selected from any of the following range: 5 µm-150 µm, 5 µm-140 µm, 5 µm-125 µm, 5 µm-120 µm, 5 µm-100 µm, 5 µm-80 µm, 6 µm-125 µm, 10 µm-150 µm, 10 µm-140 µm, 10 µm-125 µm, 10 µm-120 µm, 10 µm-100 µm, 10 µm-80 µm, 20 µm-150 µm, 20 µm-140 µm, 20 µm-125 µm, 20 µm-120 µm, 20 µm-100 µm, 20 µm-80 µm, 40 µm-60 µm, 45 µm-55 µm, and 48 µm-52 µm.

In the present application, different thickness positions of the negative electrode active material layer can be sampled, and whether the lithium-philic substance exists is detected by using an element detection related method, such that the average thickness of a distribution area of the lithium-philic substance is obtained through statistical analysis, and the average thickness is taken as "a thickness of a lithium-philic composite layer".

The content of the lithium-philic nanoparticles in the negative electrode active material layer can be reasonably controlled and the distribution of the lithium-philic nanoparticles in the negative electrode active material layer (which can be included on the surface of the negative electrode active framework) can be reasonably controlled by reasonably controlling parameters such as the mass percentage of the lithium-philic nanoparticles relative to the first negative electrode active substance, the thickness of the lithium-philic composite layer (also marked as a first active layer), the sum of the mass ratio of the lithium-philic nanoparticles to the first negative electrode active substance, etc., such that the alloying between the lithium-philic nanoparticles and lithium can be effectively promoted, and lithium ions can also be well intercalated and de-intercalated from the negative electrode active substance. Along with the increase of the content of the lithium-philic nanoparticles in the lithium-philic composite layer, the uniform dispersion of the lithium-philic nanoparticles in the whole three-dimensional space of the lithium-philic composite layer is favorably improved.

In some embodiments, the first negative electrode active substance comprises a carbon-based material. The carbon-based material comprises a graphitization-like material, and the graphitization-like material may comprise one or more of hard carbon and soft carbon. In some embodiments, the first negative electrode active substance comprises a graphitization-like material. In some embodiments, the first negative electrode active substance comprises one or more of hard carbon and soft carbon. In some embodiments, the first negative electrode active substance comprises hard carbon. In some other embodiments, the first negative electrode active substance comprises soft carbon.

In some embodiments, in the lithium-philic composite layer, a mass percentage of the graphitization-like material in the first negative electrode active substance is ≥ 50%, may also be ≥ 60%, may also be ≥ 70%, may also be ≥ 80%, may also be ≥ 90%, may also be ≥ 92%, may also be ≥ 94%, may also be ≥ 95%, may also be ≥ 96%, may also be ≥ 97%, may also be ≥ 98%, and may also be ≥ 99%. Further, the mass percentage of the graphitization-like material in the first negative electrode active substance may also be selected from any of the following percentages: 50%, 60%, 70%, 80%, 82%, 84%, 85%, 86%, 88%, 90%, 92%, 94%, 95%, 96%, 97%, 98%, 99%, 100%, etc., may also be selected from the numerical value range composed of the foregoing two percentages, such as 80%-100%, 90%-100%, 92%-100%, 94%-100%, 95%-100%, 96%-100%, 97%-100%, 98%-100%, 99%-100%, etc. In some embodiments, a mass percentage of the graphitization-like material in the first negative electrode active substance is 100%. In such a case, the first negative electrode active substance is a graphitization-like material.

The traditional graphite negative electrode material cannot meet the continuous large-current discharge capability required by a large-scale power battery due to the limitation of the Li-ion transmission channels caused by a lamellar structure. However, the traditional metal lithium negative electrode is accompanied with huge electrode volume change during the charging and discharging processes, repeated growth of a solid electrolyte interface (SEI) film and formation of metal lithium dendrites, the growth problem of the dendrites is serious, and these problems cause rapid fading of battery capacity, low coulombic efficiency, and potential safety hazards caused by internal short circuit. Traditional hard carbon materials have a higher capacity per gram than graphite. However, the hard carbon materials still have insufficient lithium storage space and are still difficult to meet the design requirements of a battery cell with a high energy density (such as 400 Wh/kg).

In the present application, when the negative electrode active substance (marked as the first negative electrode active substance) in the lithium-philic composite layer is a carbon-based material containing a graphitization-like material (such as at least one of hard carbon and soft carbon), a graphite-like microcrystal conductive structure can be used for providing a negative electrode lithium precipitation framework main body, and excessive lithium ions in a positive electrode are deposited in the negative electrode active material layer during a charging process (most of lithium is intercalated into the carbon-based host material, and a small part of lithium can be deposited on the negative electrode active framework), such that the lithium and the negative electrode active framework material together form a composite negative electrode, the cell expansion caused by lithium precipitation on the surface of the electrode plate is reduced, and the efficient utilization of the metal lithium is promoted. By using the composite negative electrode, the secondary battery can have good cycling performance, rate performance and safety. The graphitization-like material is further reasonably controlled to have a higher percentage, such that the effect is more obvious.

In some embodiments, the graphitization-like material comprises hard carbon. In such a case, the first negative electrode active substance comprises hard carbon. In some of these examples, the hard carbon comprises one or more of pyrolytic carbon and carbon black (such as acetylene carbon).

In some embodiments, in the lithium-philic composite layer, a mass percentage of the hard carbon in the first negative electrode active substance is ≥ 50%, may also be ≥ 60%, may also be ≥ 70%, may also be ≥ 80%, may also be ≥ 90%, may also be ≥ 92%, may also be ≥ 94%, may also be ≥ 95%, may also be ≥ 96%, may also be ≥ 97%, may also be ≥ 98%, and may also be ≥ 99%. Further, in the lithium-philic composite layer, the mass percentage of the hard carbon in the first negative electrode active substance may also be selected from any of the following mass percentages: 80%, 82%, 84%, 85%, 86%, 88%, 90%, 92%, 94%, 95%, 96%, 97%, 98%, 99%, 100%, etc., and may also be selected from the numerical value range composed of the foregoing two percentages, such as 80%-100%, 90%-100%, 92%-100%, 94%-100%, 95%-100%, 96%-100%, 97%-100%, 98%-100%, 99%-100%, etc. In some embodiments, in the lithium-philic composite layer, the mass percentage of the hard carbon in the first negative electrode active substance is 100%. In such a case, the first negative electrode active substance is hard carbon.

Compared with graphite, the hard carbon structure which is difficult to be completely graphitized at a high temperature (such as higher than 2,800°C) has the isotropic characteristic, and further has a delithiation potential similar to that of graphite and a higher specific capacity (such as 500-700 mAh/g). In addition, the hard carbon has more layered folds, can provide more lithium storage sites, has a larger interlayer spacing, is beneficial to rapidly diffusing lithium ions and keeping higher reversible capacity, and can realize the good battery cycling performance, rate performance and safety of the battery. Further controlling the hard carbon to have a higher percentage in the first negative electrode active substance of the lithium-philic composite layer is more beneficial to achieving a higher reversible capacity.

The carbon interlayer spacing of the traditional graphite materials is only 0.34 nm, which greatly limits the capacity of storing and transmitting lithium ions. In addition, during the charging and discharging processes, the surface structure of a graphite electrode becomes more disordered, and the exposed graphite surface reacts with the electrolyte to continuously generate an SEI film, thereby further reducing the reversible capacity.

In some embodiments, hard carbon having the following structural characteristics may be selected to induce uniform deposition of lithium as much as possible and reduce lithium dendrites: the average pore diameter of inner nanopores may be less than 50 nm, preferably 0.1 nm-5 nm; the specific surface area may be selected from 0.5-50 m²/g, preferably 2-5 m²/g; and the interlayer spacing of carbon spheres may be greater than 0.7 nm, preferably 0.77-2 nm, and the tap density may be selected from 0.8-1.2 g/cm³, further selected from 0.9-1.0 g/cm³. The "tap density" has a meaning well-known in the art.

In some embodiments, the negative electrode plate comprises a negative electrode current collector and the negative electrode active material layer is arranged on at least one side of the negative electrode current collector; and
the negative electrode active material layer further comprises a second active layer, the second active layer is arranged on the side, away from the negative electrode current collector, of the lithium-philic composite layer, the second active layer comprises a second negative electrode active substance, and the second active layer does not comprise the lithium-philic nanoparticles.

On the basis that lithium-philic nanoparticles in the lithium-philic composite layer (namely, the first active layer) can be alloyed with lithium, the second active layer which does not contain the lithium-philic nanoparticles is further arranged on the side, away from the negative electrode current collector, of the lithium-philic composite layer. When the second active layer is brought into a contact with an electrolyte, a compact solid electrolyte interface (SEI) film can be formed, which can induce the uniform deposition of lithium metal, reduce the deposition expansion, and reduce the lithium dendrites. The second active layer can further be used as a guiding layer to induce a part of precipitated lithium to be uniformly and compactly precipitated on the surface of the electrode plate, thereby improving the stability of the solid electrolyte interface (SEI) film. In such a case, the negative electrode active material layer has a double-layer structure, and there is a synergistic induced deposition of lithium by the lithium-philic nanoparticles in the first active layer, and the second active layer.

In some embodiments, the second negative electrode active substance in the second active layer comprises a graphitization-like material. In some embodiments, the second negative electrode active substance in the second active layer comprises soft carbon. In some of these embodiments, the soft carbon comprises one or more of coke, carbon fibers, and nanocarbon. In some embodiments, the second negative electrode active substance in the second active layer comprises hard carbon.

In some embodiments, in the second active layer, a mass percentage of the soft carbon in the second negative electrode active substance is ≥ 50%, may also be ≥ 60%, may also be ≥ 70%, may also be ≥ 80%, may also be ≥ 90%, may also be ≥ 92%, may also be ≥ 94%, may also be ≥ 95%, may also be ≥ 96%, may also be ≥ 97%, may also be ≥ 98%, and may also be ≥ 99%. Further, in the second active layer, the mass percentage of the soft carbon in the second negative electrode active substance may also be selected from any of the following mass percentages: 50%, 60%, 70%, 80%, 82%, 84%, 85%, 86%, 88%, 90%, 92%, 94%, 95%, 96%, 97%, 98%, 99%, 100%, etc., may also be selected from the numerical value range composed of the foregoing two percentages, such as 80%-100%, 90%-100%, 92%-100%, 94%-100%, 95%-100%, 96%-100%, 97%-100%, 98%-100%, 99%-100%, etc. In some embodiments, in the second active layer, the mass percentage of the soft carbon in the second negative electrode active substance is 100%. In such a case, the second negative electrode active substance in the second active layer is soft carbon.

The present application a double-layer coating structure design of "lower-layer lithium-philic + upper-layer graphitization-like material" is further provided. In such a case, the negative electrode active substance (i.e., the second negative electrode active substance) in the second active layer comprises a graphitization-like material. When the second active layer contains hard carbon, it is beneficial to realizing a higher reversible capacity. When the second active layer contains soft carbon, the soft carbon has a high graphitization degree, few microstructure defects, and when the second active layer is brought into a contact with the electrolyte, the lithium metal can be induced to be uniformly deposited to form a compact SEI film, the deposition expansion is reduced, and the lithium dendrites are reduced. When the percentage in the second negative electrode active substance is relatively high, it is more beneficial to promoting the uniform deposition of the lithium and forming a compact SEI film.

In some embodiments, the thickness of the second active layer is smaller than that of the lithium-philic composite layer.

In some embodiments, the thickness of the second active layer is selected from 5 µm-25 µm, and may also be selected from any of the following thickness: 5 µm, 6 µm, 7 µm, 8 µm, 9 µm, 10 µm, 11 µm, 12 µm, 13 µm, 14 µm, 15 µm, 16 µm, 17 µm, 18 µm, 20 µm, etc., and may also be selected from the range consisting of two of the above thickness, such as, in some examples, the thickness of the second active layer is selected from 8 µm-12 µm, 8 µm-22 µm, 5 µm-20 µm, 8 µm-20 µm, and 10 µm-20 µm.

In the present application, when the thickness of the second active layer is smaller than that of the first active layer (such as 5 µm-15 µm, further about 10 µm), it is possible to induce the uniform deposition of the lithium and further reasonably adjust the transmission efficiency of the lithium ions between the lithium-philic composite layer (the first active layer) and the electrolyte. In addition, when the active substance of the second negative electrode active material layer contains soft carbon, although the capacity per gram of the soft carbon is relatively low, the second active layer can be used as a deposition inducing layer of a lithium precipitation part to promote the formation of a relatively complete SEI film. By utilizing the compound regulation and control of the lithium precipitation process by the lithium-philic nanoparticles and the second active layer, the lithium precipitation part can be deposited more uniformly and compactly, such that the coulombic efficiency and the cycle life of the negative electrode can be effectively improved. The second active layer is further regulated and controlled to have a reasonable thickness, such that a good balance of improving the overall energy density of the battery cell and increasing the cycling stability can be realized. If the second active layer is too thick, it may affect the conduction of the lithium ions between the lithium-philic composite layer (first active layer) and the electrolyte solution.

The negative electrode plate according to the first aspect of the present application comprises a negative electrode current collector and a negative electrode film layer arranged on at least one surface of the negative electrode current collector. Further, at least one of the negative electrode film layers comprises the foregoing negative electrode active material layer, and any of the negative electrode active material layer contains a negative electrode active substance.

The negative electrode active substance in at least one of the negative electrode active material layers comprises the first negative electrode active substance and optionally the second negative electrode active substance (when the negative electrode plate comprises the second active layer, the corresponding negative electrode active material layer comprises the second negative electrode active substance).

In some embodiments, the negative electrode plate comprises a negative electrode current collector and a negative electrode active material film arranged on at least one surface of the negative electrode active material layer.

As a non-limiting example, the negative electrode current collector has two surfaces opposite in its own thickness direction. Further, the negative electrode film layer is arranged on either or both of the two opposite surfaces of the negative electrode current collector. As a non-limiting example, when the negative electrode film layers are arranged on both sides of the negative electrode current collector, the negative electrode film layers on both sides may be the same or different. As a non-limiting example, when the negative electrode active material layers are arranged on both sides of the negative electrode current collector, the negative electrode active material layers on both sides may be the same or different.

In the present application, unless otherwise stated, "arranged on at least one surface of the current collector" means arranged on at least one side of the current collector in the thickness direction of the current collector, either side of which may or may not independently be in direct contact with the current collector.

As a non-limiting example, the foregoing negative electrode active material layer is arranged on at least one side of the negative electrode current collector. In some examples, the negative electrode active material layer is arranged on the surface of at least one side of the negative electrode current collector, and may also be arranged on two surfaces of the negative electrode current collector. In some examples, at least one of the negative electrode active material layer is in direct contact with the negative electrode current collector. In such a case, the negative electrode active material layer is in direct contact with at least one side surface (one or two surfaces) of the negative electrode current collector.

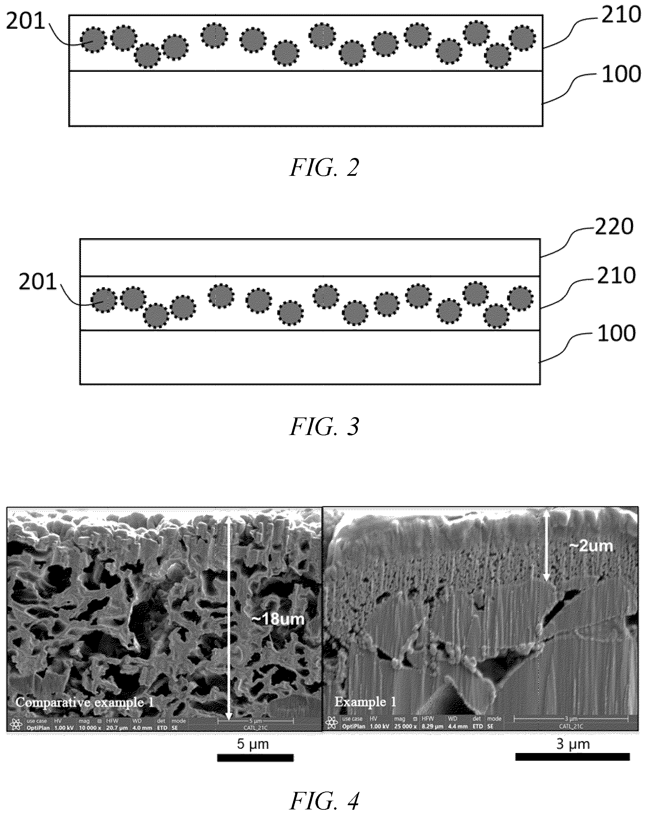

In one embodiment shown in Fig. 2, the negative electrode plate comprises a negative electrode substrate 100 (such as a negative electrode current collector, also a substrate comprising a negative electrode current collector), and a lithium-philic composite layer 210 positioned on one side surface of the negative electrode substrate 100, wherein the lithium-philic composite layer 210 comprises lithium-philic active particles 201 therein. In such a case, the negative electrode active material layer has a single-layer structure, and the lithium-philic composite layer is used as the negative electrode active material layer.

In one embodiment shown in Fig. 3, the negative electrode plate comprises a negative electrode substrate 100 (such as a negative electrode current collector, also a substrate comprising a negative electrode current collector), a lithium-philic composite layer 210 positioned on one side surface of the negative electrode substrate 100, and a second active layer 220 on the side surface, away from the negative electrode substrate, of the lithium-philic composite layer 210. The lithium-philic composite layer 210 comprises lithium-philic active particles 201 therein. The negative electrode active material layer at this time has a double-layer structure, and the negative electrode active material layer is composed of a lithium-philic composite layer and a second active layer.

In the present application, unless otherwise stated, the "negative electrode substrate" refers to a substrate that can be coated with a negative electrode slurry. In some non-limiting examples, the negative electrode substrate comprises a negative electrode current collector. In some non-limiting examples, the negative electrode substrate is a negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the negative electrode film layer may optionally comprise a binder. The binder can be selected from one or more of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from one or more of superconducting carbon, acetylene black, carbon black, Ketjen black, carbon dots, carbon nanotubes, graphene, and carbon nanofibers.

In some embodiments, the negative electrode film layer may further optionally comprise other auxiliary agents, such as a thickener (such as sodium carboxymethyl cellulose (CMC)) etc.

In some embodiments, the negative electrode plate can be prepared by dispersing the above-mentioned components for preparing the negative electrode plate, such as negative electrode active material, lithium-philic nanoparticle dispersion (lithium-philic nanoparticles colloid liquid may be preferred), a conductive agent, a binder and any other components, in a solvent (e.g., deionized water) to form a negative electrode slurry; and coating the negative electrode slurry onto at least one surface (may be a single surface or may be two surfaces) of a negative electrode substrate (such as a negative electrode current collector), followed by procedures such as drying and compaction (by means of cold pressing) to obtain the negative electrode plate.

In the present application, unless otherwise stated, "dispersion" refers to a mixed liquid in which solid particles are stably dispersed in a liquid phase.

In the present application, unless otherwise stated, "colloid liquid" refers to a liquid colloid including two different phases, with one phase being a liquid continuous phase and the other being a dispersed phase composed of tiny (non-limiting examples, such as less than or equal to 1,000 nm) solid particles or droplets.

The "lithium-philic nanoparticle dispersion" used in the present application refers to a dispersion containing lithium-philic nanoparticles.

The "lithium-philic nanoparticles colloid liquid" used in the present application refers to a colloid liquid containing lithium-philic nanoparticles. The colloid liquid is a dispersed phase composed of lithium-philic nanoparticles (solid particles), that is, the "lithium-philic nanoparticles colloid liquid" refers to a colloid liquid composed of lithium-philic nanoparticles.

In the present application, Dₙ50 of the lithium-philic nanoparticles may be less than 1,000 nm, with non-limiting examples being, such as less than 500 nm, and also the previous definition being further referred to. The particle size parameters (such as average particle size, volume cumulative distribution particle size, number cumulative distribution particle size, particle size distribution range, etc.) of the lithium-philic nanoparticles in the "lithium-philic nanoparticle dispersion" and "lithium-philic nanoparticles colloid liquid" can be measured by a laser particle size analyzer, for example, a Mastersizer 2000E laser particle size analyzer from Malvern Instruments Co., Ltd., UK, and a LS-909 laser particle size analyzer (OMEC). The "volume cumulative distribution particle size" refers to a particle size corresponding to the volume cumulative distribution particle size of a material reaching a certain percentage, and can be obtained from a volume cumulative distribution curve of the particle size of the material, and the volume cumulative distribution curve starts from zero on a small particle size side, unless otherwise stated. In addition, the "number cumulative distribution particle size" refers to the a particle size corresponding to the number cumulative distribution particle size of a material reaching a certain percentage, and can be obtained from a number cumulative distribution curve of the particle size of the material, and the number cumulative distribution curve starts from zero on a small particle size side, unless otherwise stated. The volume cumulative distribution particle size is further used as an example for illustration: in the context of the present application, the particle size of a material can be characterized by a volume cumulative distribution particle size DᵥN (wherein N represents any numerical value selected from 0-100), which denotes the particle size corresponding to a cumulative volume distribution percentage of the material reaching N%, with the volume percentage of those having a particle size less than or equal to DᵥN being N%. Taking Dᵥ99, Dᵥ50, and Dᵥ10 as examples, Dᵥ99 denotes a particle size corresponding to a cumulative volume distribution percentage of a material reaching 99%; Dᵥ50 denotes a particle size corresponding to a cumulative volume distribution percentage of a material reaching 50%; and Dᵥ10 denotes a particle size corresponding to a cumulative volume distribution percentage of a material reaching 10%; further, for example, Dᵥ50 indicates that 50% particles by volume of a material have a particle size less than or equal to Dᵥ50, and 50% particles by volume of the material have a particle size larger than Dᵥ50; and for example, Dᵥ99 indicates that 99% particles by volume of a material have a particle size less than or equal to Dᵥ99, and 1% particles by volume of the material have a particle size larger than Dᵥ99. A person skilled in the art could understand the meanings of average particle size and volume cumulative distribution particle size, and can determine same by means of an instrument and method well-known in the art.

In an experimental research of the inventors, in some experimental examples hard carbon is used as a first negative electrode active substance, and the prepared lithium-ion secondary batteries have a longer cycle life (correspondingly, the coulombic efficiency after the initial cycling is higher), and the problems of low electrode plate expansion and lithium dendrites are obviously solved. The reason is presumed to be as follows: The hard carbon has a higher capacity per gram, most lithium can be intercalated into a hard carbon host material, and thus the reaction loss of a lithium metal and an electrolyte caused by exposure in the electrolyte is reduced. In addition, a small part of lithium is allowed to be precipitated out from the surface of the carbon host material, the lithium metal loss during the cycling process can be reduced, and the coulombic efficiency during the cycling process after the initial cycling is improved. Examples 1-12, and 21-24 are included but not limited to.

In still other experimental examples, the first negative electrode active substance is a composite material (for example, a combination of hard carbon and soft carbon, a combination of hard carbon and graphite, and a combination of hard carbon and a silicon-based material) including hard carbon (a mass percentage of the hard carbon in the first negative electrode active material is ≥ 50%, and selected from 50%-100%, including 50%, 80%, 90%, 95%, etc.), and also has a longer cycle life, and problems of low electrode plate expansion and lithium dendrites are obviously alleviated. Examples 13-15 are included but not limited to.

In some experimental examples, the lithium-philic nanoparticles is a combination of Ag and Au, and the prepared lithium-ion secondary batteries all have a longer cycle life (correspondingly, the coulombic efficiency after the initial cycling is also high), and problems of low electrode plate expansion and lithium dendrites are obviously alleviated. In such a case, the lithium-alloying mechanism comprises the formation of a solid solution with lithium, and further comprises the formation of an intermetallic compound with lithium.

In the experimental research of the inventors, in some experimental examples, soft carbon is used as a first negative electrode active substance. Compared with a soft carbon negative electrode without introducing lithium-philic nanoparticles, the cycle life is prolonged, the expansion of an electrode plate is reduced, and the problem of lithium dendrite is obviously alleviated. Example 16 is included but not limited to.

In the experimental research of the inventors, in some experimental examples hard carbon is used as the first negative electrode active substance and soft carbon as the second negative electrode active substance, and thus the cycle life is longer (correspondingly, the coulombic efficiency after the initial cycling is also higher), and the problems of low electrode plate expansion and lithium dendrites are obviously alleviated. The reason is presumed to be as follows: The hard carbon has higher capacity per gram, most of lithium can be intercalated into the hard carbon host material, and the other part of lithium is precipitated out under the induction of a lithium-philic substance to reduce a cycle expansion change rate inside the electrode plate. Besides, the soft carbon is used as a negative electrode active substance and can induce the residual lithium to be precipitated out on the surface of the electrode plate to be more uniform and compact, such that the lithium metal dendrites are obviously reduced. Example 1, example 17, and example 18 are included but not limited to.

**In a second aspect,** the present application provides a secondary battery comprising a positive electrode plate, a separator, and a negative electrode plate according to the first aspect of the present application, wherein the separator is positioned between the positive electrode plate and the negative electrode plate.

In the present application, the secondary battery comprises a positive electrode plate, a negative electrode plate according to the first aspect of the present application, an electrolyte, and a separator. During the charging and discharging process of the battery, lithium ions are intercalated and de-intercalated back and forth between the positive electrode plate and the negative electrode plate, the electrolyte functions to conduct the lithium ions between the positive electrode plate and the negative electrode plate, and the separator is arranged between the positive electrode plate and the negative electrode plate, mainly prevents positive and negative electrodes from short-circuiting, and enables the passage of lithium ions.

The negative electrode plate according to the first aspect of the present application is used to prepare a secondary battery. Alloying of the lithium-philic nanoparticles in the lithium-philic composite layer and lithium can be utilized. The reactivity between the negative electrode material and the electrolyte after the lithium alloying can be obviously reduced, thereby inducing the deposition of the lithium metal inside and on the surface of the electrode plate, reducing the problem of high charging expansion caused by the lithium precipitation inside and on the surface, further reducing the loss of the lithium metal, and effectively improving the coulombic efficiency of the negative plate and the cycle life of the battery.

In some embodiments, a CB value of the secondary battery is less than 1; the side, facing the positive electrode plate, of the negative electrode plate comprises the negative electrode active material layer, the side, facing the negative electrode plate, of the positive electrode plate comprises a positive electrode active material layer, and the CB value is a capacity ratio of the negative electrode active material layer to the positive electrode active material layer which are oppositely arranged under the same area (the formation loss is supplemented by the amount of lithium supplement as determined by the experiment, and the measured value may be slightly deviated).

In some embodiments, a CB value of the secondary battery can meet 0.1 ≤ CB < 1, and further may meet 0.15 ≤ CB < 1. Further, in some embodiments, a CB value of the secondary battery may further be selected from any of the following numerical values: 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, etc., and may further be selected from the range composed of two of the numerical values.

In some embodiments, a CB value of the secondary battery may be selected from any of the following ranges: 0.1-0.9, 0.1-0.8, 0.1-0.75, 0.1-0.7, 0.15-0.9, 0.15-0.8, 0.15-0.75, 0.15-0.7, 0.3-0.9, 0.3-0.6, 0.2-0.8, 0.2-0.9, 0.6-0.75, 0.3-0.7, 0.3-0.8, 0.4-0.8, 0.5-0.7, etc.

In the present application, a "cell balance (CB) value" is a ratio of the surface capacity of the negative electrode to that of the positive electrode, and is also equal to a ratio of the capacity of the negative electrode plate to that of the positive electrode plate under the same area in numerical value. In the present application, the "surface capacity" has a well-known meaning and refers to a ratio of the capacity of an electrode plate to the area of the electrode plate. In a low CB value system, a part of lithium is intercalated into a carbon material in a lithiation mode, and the other part of lithium is precipitated out on the surface of an electrode plate in a lithium metal mode possibly due to the saturation of the lithium storage space in the carbon-based material, thereby ensuring the cycle life. In the present application, the CB value can be obtained by testing half-cells respectively manufactured by the positive electrode plate and the negative electrode plate. Methods for preparing a half-cell are known to a person skilled in the art. The CB value of a certain battery can be detected by the following method: with regard to the capacity of a positive electrode plate in a battery to be tested, a charge-discharge cut-off voltage (such as 2.0-4.3 V, further such as 2.0-3.65 V or 2.8-4.3 V) 0.1 C low-current cycle can be arranged for lithium at the positive electrode, and the capacity of the positive electrode can be calibrated according to the initial circle cycling data (or specific number of cycles); and with regard to the capacity of a negative electrode plate in a battery to be tested, a charge-discharge cut-off voltage (0-2 V) low-current cycle can be arranged for lithium, and the capacity of the negative electrode can be calibrated according to the corresponding initial circle cycling data (or specific number of cycles).

The present application further provides a design of a lithium-philic modified negative electrode of a low CB system, which can give consideration to both the high energy density and cycling stability. In the present application, for the design of the battery cell with a CB value less than 1, the lithium-philic nanoparticles can be alloyed with the lithium in a charging process, such that the stability of the lithium metal is improved, the lithium metal can further be induced to be uniformly deposited inside the negative electrode plate (which can be included on a negative electrode active framework), such that the lithium and the negative electrode active framework material jointly form a composite negative electrode, the lithium deposition is effectively regulated and controlled, and the good balance of improving the overall energy density of the battery cell and increasing the cycling stability can be better achieved. When the CB value is less than 1, the use of the lithium-philic nanoparticles in the negative electrode active material layer allows a part of precipitated lithium metal to be uniformly deposited inside the negative electrode active layer, such that the expansion of the electrode plate is reduced. When the lithium-philic nanoparticles are distributed on the surfaces of at least some negative electrode active substances, the lithium-philic nanoparticles can induce the lithium metal to be uniformly deposited on the negative electrode active framework, and the expansion of the electrode plate is reduced. In addition, when the negative electrode plate is provided with the second active layer, the second active layer can be used as a guiding layer to induce another part of precipitated lithium to be uniformly and compactly precipitated on the surface of the electrode plate. In such a case, most lithium can be stored in the active material layer, only a small part of lithium is in a lithium metal precipitation state.

In some embodiments, the CB value of the battery cell is designed, such that the capacity of the negative electrode can be increased to 500 mAh/g-700 mAh/g.

### Positive electrode plate

The positive electrode plate comprises a positive electrode current collector and a positive electrode film layer arranged on at least one surface of the positive electrode current collector, at least one of the positive electrode film layer comprises a positive electrode active material layer, and any of the positive electrode active material layer comprises a positive electrode active substance. It can be seen that the positive electrode plate comprises a positive electrode active substance.

As a non-limiting example, the positive electrode current collector has two surfaces opposite in its own thickness direction. Further, the positive electrode film layer is arranged on either or both of the two opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In the present application, the secondary battery may be a lithium-ion battery, that is, a lithium-ion secondary battery. The positive electrode active substance comprises a lithium-ion material (the non-limiting example being such as a lithium-containing phosphate, a lithium transition metal oxide, and a modified substance of any of the foregoing).

In some embodiments, the positive electrode plate comprises a positive electrode active substance; the positive electrode active substance comprises a lithium-ion material; and further, the lithium-ion material comprises one or more of the following substances: a lithium-containing phosphate (such as a lithium-containing phosphate of an olivine structure), a lithium transition metal oxide, and a substance composed of any of the foregoing substances and a doping element.

In some examples, the positive electrode active substance comprises one or more of the following substances: lithium iron phosphate, lithium manganese iron phosphate, a lithium cobalt oxide, a lithium nickel oxide, a lithium manganese oxide, a lithium nickel manganese oxide, a lithium nickel cobalt manganese oxide, and a lithium nickel cobalt aluminum oxide, and a substance composed of any of the foregoing substances and a doping element.

In the present application, unless otherwise stated, the doping element in any one of the positive electrode active substance independently comprises one or more of a transition metal element and a non-transition metal element. Active ions of the lithium-ion secondary battery comprise lithium ions. The negative electrode plate of the present application can comprise the lithium-philic metal to regulate and control the lithium deposition process to inhibit the reactivity between the negative electrode material and the electrolyte solution, reduce the lithium metal loss in the cycling process, and effectively improve the coulombic efficiency of the negative plate and the cycle life of the battery.

In some embodiments, the positive electrode active material can be a positive electrode active substance known in the art for batteries. As a non-limiting example, the positive electrode active substance may include one or more of the following materials: a lithium-containing phosphate of an olivine structure, a lithium transition metal oxide, and their respective modified compounds. However, the present application is not limited to these materials, and other conventional materials or substances that can be used as positive electrode active substances for batteries may also be used. These positive electrode active substances may be used alone or in combination of two or more. Herein, non-limiting examples of lithium transition metal oxides may include, but are not limited to, at least one of a lithium cobalt oxide (e.g. LiCoO₂), a lithium nickel oxide (e.g. LiNiO₂), a lithium manganese oxide (e.g. LiMnO₂, LiMn₂O₄), a lithium nickel cobalt oxide, a lithium manganese cobalt oxide, a lithium nickel manganese oxide, a lithium nickel cobalt manganese oxide (e.g. LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (e.g. LiNi_{0.85}Co_{0.15}Al_{0.05}O₂), and modified compounds thereof, etc. Non-limiting examples of the lithium-containing phosphate of an olivine structure may include, but are not limited to, one or more of lithium iron phosphate (e.g. LiFePO₄ (also referred to as LFP)), a lithium iron phosphate and carbon composite, lithium manganese phosphate (e.g. LiMnPO₄), a lithium manganese phosphate and carbon composite, lithium iron manganese phosphate, and a lithium iron manganese phosphate and carbon composite.

In some embodiments, the positive electrode film layer may further optionally comprise a binder. As a non-limiting example, the binder may comprise one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer may further optionally comprise a conductive agent. As a non-limiting example, the conductive agent may comprise one or more of superconductive carbon, acetylene black, carbon black, Ketjen black, carbon dots, carbon nanotubes, graphene, and carbon nanofibers.

In some embodiments, the positive electrode plate can be prepared by dispersing the above-mentioned components for preparing positive electrode plates, for example, the positive electrode active substance, the conductive agent, the binder and any other components, in a solvent (e.g. N-methylpyrrolidone) to form a positive electrode slurry; and coating the positive electrode slurry onto at least one surface (may be a single surface or may be two surfaces) of a positive electrode current collector, then followed by the procedures such as drying and compaction (may be cold pressing) to obtain the positive electrode plate.

### Electrolyte

The electrolyte functions to conduct active ions (lithium ions) between the positive electrode plate and the negative electrode plate.

In some embodiments, the electrolyte is liquid, that is, an electrolyte solution can be used. The electrolyte solution comprises an electrolyte salt and a solvent. In a lithium-ion secondary battery, the electrolyte salt may comprise an electrolyte lithium salt.

In some embodiments, the electrolyte lithium salt may comprise one or more of lithium hexafluorophosphate (LiPF₆), lithium tetrafluoroborate (LiBF₄), lithium perchlorate (LiClO₄), lithium hexafluoroarsenate (LiAsF6), lithium bisfluorosulfonimide (LiFSI), lithium bis(trifluoromethanesulfonimide) (LiTFSI), lithium trifluoromethanesulfonate (LiCF₃SO₃), lithium difluorophosphate, lithium borate difluoroxalate, lithium bis(oxalato)borate (LiBOB), lithium bisoxalatodifluorophosphate, and lithium tetrafluorooxalatophosphate.

In some embodiments, the electrolyte lithium salt may comprise one or more of LiPF6 (lithium hexafluorophosphate), LiBF₄ (lithium tetrafluoroborate), LiClO₄ (lithium perchlorate), LiAsF6 (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluorooxalate borate), LiBOB (lithium dioxalate borate), LiPO₂F₂ (lithium difluorophosphate), LiDFOP (lithium bisoxalatodifluorophosphate) and LiTFOP (lithium tetrafluorooxalate phosphate). Further, the electrolyte lithium salt may comprise one or more of LiPF6 (lithium hexafluorophosphate), LiBF₄ (lithium tetrafluoroborate), LiBOB (lithium dioxalate borate), LiDFOB (lithium difluorooxalate borate), LiTFSI (lithium bistrifluoromethanesulfonimide) and LiFSI (lithium bisfluorosulfonimide).

In some embodiments, the solvent in the electrolyte solution is an organic solvent. In some embodiments, the organic solvent in the electrolyte solution may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, one or more organic solvents that facilitate reversible deposition and exfoliation of lithium on a negative electrode active framework may be selected. Further, the organic solvent may be an ester or an ether.

The ester solvent may comprise one or more of a carbonic ester and a halogenated carbonic ester, and as a non-limiting example, may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), and a fluoro-compound of any of the foregoing. Further, the ester solvent may comprise one or more of dimethyl carbonate (DMC), diethyl carbonate (DEC), ethyl methyl carbonate (EMC), ethylene carbonate (EC), fluoroethylene carbonate (FEC), propylene carbonate (PC), and methyl ethyl trifluorocarbonate (TFMEC).

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

In some embodiments, the additive may comprise one or more of vinylene carbonate (VC), vinyl ethylene carbonate (VEC), fluoroethylene carbonate (FEC), difluoroethylene carbonate (DFEC), trifluoromethyl ethylene carbonate (TFPC), methylene methanedisulfonate (MMDS), prop-1-ene-1,3-sultone (PST), ethylene sulfite (ES), propylene sulfite (PS), vinyl sulfate (DTD), succinonitrile (SN), adiponitrile (ADN), a sulfonate cyclic quaternary ammonium salt, tris(trimethylsilane) phosphate (TMSP), tris(trimethylsilane)borate (TMSB), and anisole.

In some embodiments, an electrolyte solution injection coefficient of a single battery cell is ≥ 2.4 g/Ah, preferably 2.4-3.2 g/Ah.

### Separator

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

### Electrode assembly and secondary battery

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

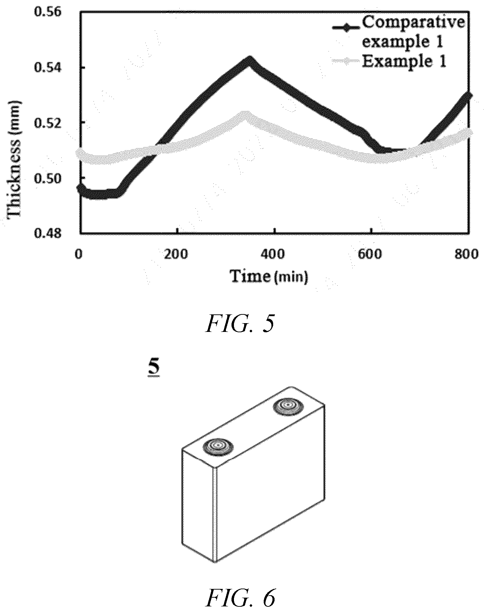

The shape of the secondary battery is not particularly limited in the present application and may be cylindrical, square or of any other shape. For example, Fig. 6 shows a secondary battery 5 with a square structure as an example.

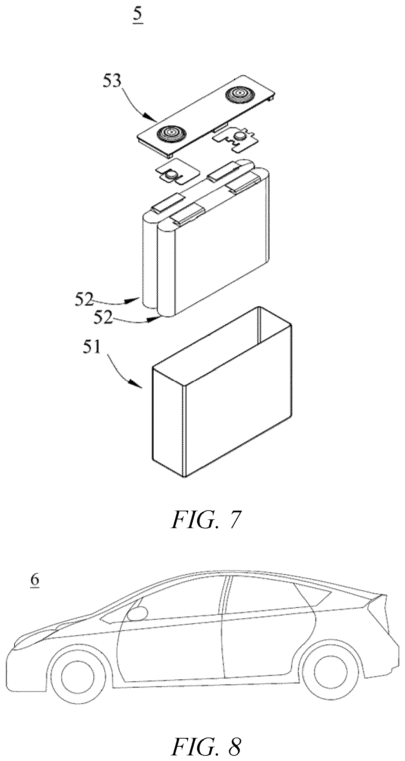

In some embodiments, with reference to Fig. 7, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

**In a third aspect,** the present application provides a power consuming device, comprising at least one of a negative electrode plate according to the first aspect of the present application and a secondary battery according to the second aspect of the present application.

The power consuming device prepared by using at least one of the negative electrode plate according to the first aspect of the present application and the secondary battery according to the second aspect of the present application can utilize the alloying of the lithium-philic nanoparticles in the lithium-philic composite layer and lithium, thereby inhibiting the reactivity between the negative electrode material and the electrolyte solution, regulating and controlling the lithium deposition process, effectively improving the coulombic efficiency of the negative electrode and the cycle life of the battery, and prolonging the service life of the power consuming device.

The secondary battery according to the second aspect of the present application may be used as a power supply of the power consuming device, or an energy storage unit of the power consuming device. The power consuming device may include a mobile device, an electric vehicle, an electric train, ship, and satellite, an energy storage system, etc., but is not limited thereto. wherein the mobile equipment may be, for example, a mobile phone, a laptop computer, etc.; the electric vehicle may be, for example, a pure electric vehicle, a hybrid electric vehicle, a plug-in hybrid electric vehicle, an electric bicycle, an electric scooter, an electric golf cart, an electric truck, etc., but is not limited thereto.

For the power consuming device, the secondary battery can be selected according to the usage requirements thereof.

Fig. 8 shows a power consuming device 6 as an example. The power consuming device may be a pure electric vehicle, a hybrid electric vehicle, a plug-in hybrid electric vehicle, etc.

As another example, the device may be a mobile phone, a tablet computer, a laptop computer, etc. The device is generally required to be thin and light, and may have a secondary battery used as a power source.

**In a fourth** aspect, the present application provides a method for preparing a negative electrode plate. The method can be used for preparing a negative electrode plate according to the first aspect of the present application.

In some embodiments, the present application provides a method for preparing a negative electrode plate, comprising the following steps:
S100: preparing a first negative electrode slurry comprising a first negative electrode active substance and lithium-philic nanoparticles, wherein the lithium-philic nanoparticles is as defined according to the first aspect of the present application;
S300: coating the first negative electrode slurry onto at least one surface of a negative electrode substrate, and drying same to form a lithium-philic composite layer to prepare a lithium-philic substrate; and
S500: cold-pressing the lithium-philic substrate to prepare a negative electrode plate; or coating a second negative electrode slurry containing a second negative electrode active substance onto a surface of one side, comprising the lithium-philic composite layer, of the lithium-philic substrate, drying and cold-pressing same to form a second active layer, and preparing a negative electrode plate.

The definition of "negative electrode substrate" may be found in the first aspect of the present application and refers to a substrate that can be coated with a negative electrode slurry. In some non-limiting examples, the negative electrode substrate comprises a negative electrode current collector. In some non-limiting examples, the negative electrode substrate is a negative electrode current collector.

A dispersion containing the lithium-philic nanoparticles is introduced into the negative electrode slurry, the lithium-philic nanoparticles are uniformly dispersed in the negative electrode slurry, followed by further coating, drying etc., to gather the lithium-philic nanoparticles on a negative electrode substrate (such as a negative electrode current collector and also a substrate comprising the negative electrode current collector) to form a lithium-philic composite layer. The lithium-philic composite layer can be directly used as a surface layer in the negative electrode plate to come into contact with an electrolyte, and a second active layer (not lithium-philic) can be further laminated, such that a double-layer coating structure of "lower-layer lithium-philic + upper-layer non-lithium-philic", such as "lithium-philic composite layer + second active layer", is obtained.

In some embodiments, the step of preparing the first negative electrode slurry comprises mixing the first negative electrode active substance and a dispersion containing the lithium-philic nanoparticles. Further, in some embodiments, the concentration of the lithium-philic nanoparticles in the dispersion is selected from 100 µg/L-1,000 µg/L. The concentration of the lithium-philic nanoparticles in the dispersion may further be selected from any of the following concentrations: 100 µg/L, 150 µg/L, 200 µg/L, 250 µg/L, 300 µg/L, 350 µg/L, 400 µg/L, 450 µg/L, 500 µg/L, 520 µg/L, 540 µg/L, 545 µg/L, 550 µg/L, 560 µg/L, 580 µg/L, 600 µg/L, 700 µg/L, 750 µg/L, 800 µg/L, 850 µg/L, 900 µg/L, 950 µg/L, 1,000 µg/L, etc., and may further be selected from the range composed of two of the concentrations, such as 200 µg/L-800 µg/L, 400 µg/L-800 µg/L, 400 µg/L-600 µg/L, 400 µg/L-500 µg/L, 500 µg/L-600 µg/L, 520 µg/L-580 µg/L, etc.

In the present application, the "dispersion containing lithium-philic nanoparticles" may be marked as lithium-philic nanoparticle dispersion.

In some embodiments, the concentration of the lithium-philic nanoparticles in the dispersion is selected from 200 µg/L-800 µg/L.

In some embodiments, the concentration of the lithium-philic nanoparticles in the dispersion is selected from 400 µg/L-500 µg/L.

By reasonably controlling the concentration of the lithium-philic nanoparticles in the dispersion, the distribution concentration of the lithium-philic nanoparticles in the negative electrode slurry can be better adjusted, such that after coating and drying, the lithium-philic nanoparticles are reasonably distributed in the negative electrode active material layer (including on the surface of the negative electrode active framework), the lithium can be effectively induced to be uniformly deposited and an artificially alloyed interface is formed, and at the same time, a better lithium-ion intercalation/de-intercalation rate is also kept.

In some embodiments, any one or more of the following features (may be any appropriate combination of multiple features in the following group) are satisfied:
the step of preparing the first negative electrode slurry further comprises adding a conductive agent, a binder, and a solvent;
the first negative electrode active substance in the first negative electrode slurry is defined in accordance with the first negative electrode active substance in the lithium-philic composite layer according to the first aspect of the present application;
the second negative electrode active substance in the second negative electrode slurry is defined in accordance with the second negative electrode active substance in the second active layer according to the first aspect of the present application; and
the negative electrode plate is as defined in the first aspect of the present application.

In some embodiments, the first negative electrode active substance in the first negative electrode slurry is defined in accordance with the first negative electrode active substance in the lithium-philic composite layer according to the first aspect of the present application. For example, the first negative electrode active substance comprises a graphitization-like material. Further, the first negative electrode active substance may comprise one or more of hard carbon and soft carbon. More further, the first negative electrode active substance may comprise hard carbon. More further, the hard carbon may comprise one or more of pyrolytic carbon and carbon black.

In some embodiments, the second negative electrode active substance in the second negative electrode slurry is defined in accordance with the second negative electrode active substance in the second active layer according to the first aspect of the present application. For example, the second negative electrode active substance in the second active layer may comprise a graphitization-like material. Further, the second negative electrode active substance in the second active layer may comprise soft carbon. Further optionally, the soft carbon may comprise one or more of coke, carbon fibers, and nanocarbon.

In some embodiments, the negative electrode plate is as defined in any embodiment in the first aspect of the present application. The negative electrode plate of the first aspect of the present application can be prepared by the preparation method of the second aspect.

In some embodiments, the lithium-philic nanoparticle dispersion is prepared by using a method comprising the steps of:
preparing a mixed solution containing a metal precursor, a reducing agent and optionally a dispersant, wherein the metal precursor comprises a salt-type precursor of the lithium-philic nanoparticles; and
subjecting the mixed solution to a reduction reaction to convert the salt-type precursor into the lithium-philic nanoparticles.

In some preparation methods, the method for preparing the negative electrode plate satisfies any one or more of the following features (may be any appropriate combination of multiple features in the following group):
the concentration of the salt-type precursor (such as a silver precursor) in the mixed solution is selected from 1 µM-20 µM. Optionally, the concentration of the salt-type precursor in the mixed solution is selected from 2 µM-10 µM.

The mass volume concentration of the reducing agent in the mixed solution is selected from 0.10%-0.30% (w/v). Optionally, the mass volume concentration of the reducing agent in the mixed solution is selected from 0.15%-0.26% (w/v). Optionally, the mass volume concentration of the reducing agent in the mixed solution is selected from 0.20%-0.26% (w/v).

The reducing agent comprises one or more of sodium citrate, hydrazine hydrate, sodium hypophosphite, carboxymethyl cellulose and a sodium salt thereof (such as sodium carboxymethyl cellulose), glucose, gluconic acid and a sodium salt thereof, formaldehyde, sodium borohydride, ascorbic acid and hydrogen peroxide. Optionally, the reducing agent comprises one or more of sodium citrate, hydrazine hydrate, sodium hypophosphite, sodium carboxymethyl cellulose, glucose, formaldehyde, sodium borohydride, ascorbic acid and hydrogen peroxide.

The dispersant comprises one or more of polyethylene glycol, polyvinylpyrrolidone (PVP), aniline and formaldehyde sulfonate.

For those skilled in the art, in the case that the chemical composition of the metal nanoparticles is known, a corresponding dispersion (such as a colloid liquid) can be prepared by a conventional method in the art, wherein the parameters such as the type of the precursor, the type and amount of the reducing agent, and the type and amount of the dispersant can be selected according to the concentration and particle size requirements of the lithium-philic nanoparticle dispersion. The type of the required precursor and reducing agent may vary for different lithium-philic metals. By adjusting the concentration of the precursor, the reducibility of the reducing agent, the amount of the reducing agent, and other parameters, the size of the metal particles generated by reduction can be regulated and controlled. In addition, when the target concentration or the target particle size of the lithium-philic nanoparticle dispersion is different, different dispersants may be selected to maintain uniform dispersion of the generated lithium-philic nanoparticles in the dispersion. The "lithium-philic nanoparticle dispersion" used in the present application can be directly commercially obtained, can also be obtained by preparing the dispersion from the commercially available nanoparticles, and can further be prepared by referring to the existing preparation method in the art. For example, to obtain a nano-silver dispersion, a soluble silver salt (such as silver nitrate) may be used as a precursor. Further, one or more reducing agents selected from carboxymethyl cellulose and a sodium salt thereof (such as sodium carboxymethyl cellulose), glucose, gluconic acid and a sodium salt thereof, formaldehyde, sodium borohydride, ascorbic acid, hydrogen peroxide, etc., may be selected. Further, for example, in order to obtain a nano-gold dispersion, a soluble gold salt (such as chloroauric acid) may be used as a precursor. Further, reducing agents such as sodium citrate may be selected. Further taking the preparation of a nano-gold colloid liquid as an example, the more the amount of the reducing agent (such as citric acid), the smaller the diameter of the colloid gold particles, and conversely, the less the amount of the reducing agent, the larger the diameter of the colloid gold particles. However, when the diameter of the nanoparticle is too small (such as less than 5 nm, or less than 10 nm), the nanoparticles are prone to aggregation and not stable for a long period of time.

The salt-type precursor of the lithium-philic nanoparticles is subjected to a reduction reaction by using a reducing agent to generate the lithium-philic nanoparticles of the present application, and a dispersant of a proper type can be introduced into a reaction system to prepare a uniform dispersion of the lithium-philic nanoparticles. The size of the lithium-philic nanoparticles and the concentration thereof in the dispersion can be reasonably controlled by reasonably controlling the preparation parameters including but not limited to the type and the amount of the precursor, the type and the amount of the reducing agent, the type of the dispersant etc., such that the uniform distribution of the lithium-philic nanoparticles on the surface of the negative electrode active framework can be better controlled.

Some reducing agents may also function as a dispersant to reduce the precursor while preventing the generated nanoparticles from settling.

When the reducing agent or the dispersant contains a polar group (such as carboxyl, hydroxyl, halogen etc.,), more abundant lithium-ion adsorption sites can be provided, and the homogenization of the deposition flux of the lithium ions can be realized. Further, a smooth and flat lithium alloyed interface and a uniform surface stress distribution stabilize an SEI film, thereby effectively reducing the consumption of an active lithium metal and an electrolyte. The lithium-philic coating and the polar group can reduce the lithium precipitation overpotential in the electrode plate by a synergistic effect, more effectively direct the uniform lithium deposition in the framework, and avoid the generation of dead lithium. The carboxymethyl cellulose and a sodium salt thereof, glucose, and gluconic acid and a sodium salt thereof all contain hydroxyl. The carboxymethyl cellulose and gluconic acid contain carboxyl.

In some embodiments, the reducing agent comprises sodium carboxymethyl cellulose.

In the preparation method of the present aspect, a suitable type of the dispersants may be selected depending on the reducing agent system.

In some embodiments, the dispersant comprises one or more of polyethylene glycol, polyvinylpyrrolidone (PVP), aniline and formaldehyde sulfonate.

In some embodiments, the dispersant comprises polyvinylpyrrolidone (PVP). Further, the reducing agent comprises sodium carboxymethyl cellulose.

The sodium carboxymethyl cellulose has the characteristics of safety, being environmentally friendly and low cost, can stably improve the viscosity of a slurry and prevent the slurry from precipitating in the negative electrode slurry containing a hard carbon powder, contains abundant -COO⁻ functional groups, can form good adhesion with a negative electrode current collector (such as a metal foil), and also is conductive.

When the PVP is used as a dispersant, there are two advantages: on one hand, a PVP long molecular chain can coat the surface of the lithium-philic nanoparticles to prevent the formed nanoparticles from agglomerating; and on the other hand, the PVP molecule can be selectively attached to a specific crystal face, such that the growth rate of the crystal face is slower than that of other crystal faces, thus achieving an effect of controlling the microscopic morphology of the generated nanoparticle.

In some other embodiments, the present application further provides a method for preparing a negative electrode plate, comprising the steps of:
S200: providing a carbon-based negative electrode plate, wherein the carbon-based negative electrode plate comprises a negative electrode substrate and a carbon-based active material layer positioned on at least one side of the negative electrode substrate; and the carbon-based active material layer comprises a foregoing carbon-based active substance;
S400: penetrating the lithium-philic nanoparticle dispersion along the direction from the surface of the carbon-based active material layer to the negative electrode substrate, drying same, converting at least one part of the carbon-based active material layer into a lithium-philic modified material layer (a lithium-philic composite not subjected to cold pressing, which is marked as a first structural layer), and preparing a lithium-philic substrate; and
S500: as previously mentioned: cold-pressing the lithium-philic substrate to prepare a negative electrode plate; or coating a second negative electrode slurry containing a second negative electrode active substance onto a surface of one side, comprising the lithium-philic composite layer, of the lithium-philic substrate, drying and cold-pressing same to form a second active layer (in such a case, the first structural layer is transformed into a cold-pressed lithium-philic composite layer), and preparing a negative electrode plate.

The coating containing lithium-philic nanoparticles can be formed on the surface of the negative electrode active framework by an in-situ deposition method, such that a part of the negative electrode active material layer is converted into a lithium-philic composite layer, and by alloying the lithium-philic nanoparticles and lithium, the utilization rate of lithium can be improved, the lithium metal loss during the cycling process can be reduced, and the coulombic efficiency of the negative electrode and the cycle life of the battery can be effectively improved.

In some embodiments, in S400, penetrating the lithium-philic nanoparticle dispersion along the direction from the surface of the carbon-based active material layer to the negative electrode substrate may be realized by one or more of the following: drop-coating, dipping, and winding bar and blade-coating to ensure that the lithium-philic nanoparticle dispersion is fully soaked in the non-lithium-philic carbon-based active material layer. Further, for example, non-limiting examples of drying are: leaving to stand in a vacuum oven at 80°C for a period of time (such as ≥ 3 hours) until trace amount of water is removed.

**A fifth aspect of the present application** provides use of the negative electrode plate according to the first aspect of the present application in the preparation of a lithium-ion secondary battery. Reference is made to the method of using the negative electrode slurry according to the first aspect of the present application and the method of assembling a secondary battery using the negative electrode plate according to the second aspect of the present application.

Hereinafter, some examples of the present application will be explained. The examples described below are exemplary and are merely for explaining the present application, and should not be construed as limiting the present application. The examples in which the techniques or conditions are not specified are based on the description above or based on the techniques or conditions described in documents in the art or according to the product instruction. All the reagents or instruments used therein, for which the manufacturers are not specified, are conventional products that can be commercially available, or can be synthesized from a commercially available product by means of a conventional manner.

In the following examples and comparative examples, room temperature and normal temperature are each 20°C-30°C independently. Further, the temperature may be 25°C.

In the following examples, unless otherwise stated, CMC means sodium carboxymethylcellulose (CAS No.: 9004-32-4).

In the following examples, unless otherwise stated, wt% represents a mass percentage content.

### Preparation of raw materials dispersion containing lithium-philic nanoparticles (lithium-philic nanoparticle dispersion)

The dispersion containing lithium-philic nanoparticles can be obtained commercially, can also be prepared by using commercially available nanoparticles, and can also be prepared by using the following method: the precursor of the lithium-philic nanoparticles is subjected to a reduction reaction with a reducing agent to prepare the lithium-philic nanoparticles, and a proper dispersant can be added according to the stability of a reduction reaction system, such that the lithium-philic nanoparticles generated by the reduction reaction can form a stable dispersion.

The type and amount of raw materials of a precursor of the lithium-philic nanoparticles, a reducing agent, a dispersant etc., and appropriate reaction conditions can be selected by referring to the type of the lithium-philic substance, the preset concentration of the lithium-philic nanoparticle dispersion and the predetermined particle size shown in Table 1, and the dispersion containing the target lithium-philic nanoparticles is prepared. A dispersion comprising two or more lithium-philic nanoparticles may be prepared by mixing dispersions comprising different chemical compositions of the lithium-philic nanoparticles. The particle size of the dispersion can be tested by a laser particle size analyzer to determine whether the particle size of the nanoparticles in the dispersion meets a preset range.

Lithium-philic nanoparticle dispersions SLO1 to SL09 are prepared by using the method with reference to Table 1.

The preparation of a nano-silver dispersion and a nano-gold dispersion are used as non-limiting examples to provide a detailed preparation method. In addition, commercially available nano-tin powder (with a particle size of about 50 nm) and nano-zinc powder (with a particle size of 20-50 nm) are used to prepare a dispersion. In the present application, the size of particles may be expressed as "grain size" and the diameter of a sphere of the same material as a particle to be measured may be used as an equivalent particle size of the particle to be measured.

### dispersion SL01: lithium-philic nanoparticles as Ag

32 mL of a 0.2% (w/v) CMC aqueous solution was stirred for 15 min at room temperature, 16 mL of a 0.5 mM AgNO₃ aqueous solution was dropwise added, the solution was continuously stirred for 10 min to stabilize the system, then 480 µL of a 0.1 M glucose aqueous solution and 2.4 mL of a 0.1 M NaOH aqueous solution were added, the pH of the mixed solution was adjusted to 12, and the mixed solution was heated in a water bath at 60°C for 30 min to obtain a nano-silver dispersion with Dₙ50 of about 50 nm.
**dispersion SL01a**: the method essentially the same as SLO1 was used, with the difference that: the size of the nano-silver particles was changed by adjusting the amount of CMC. A nano-silver dispersion with Dₙ50 of about 10 nm was prepared. Refer to Table 1.
**dispersion SL01b:** the method essentially the same as SLO1 was used, with the difference that: the size of the nano-silver particles was changed by adjusting the amount of CMC. A nano-silver dispersion with Dₙ50 of about 100 nm was prepared. Refer to Table 1.
**dispersion SL01c**: the method essentially the same as SLO1 was used, with the difference that: the size of the nano-silver particles was changed by adjusting the amount of CMC. A nano-silver dispersion with Dₙ50 of about 200 nm was prepared. Refer to Table 1.
**dispersion SL02: lithium-philic nanoparticles as Au**

100 mL of a 0.01 wt% chloroauric acid aqueous solution was heated to boiling, then 100 mL of a 1 wt% chloroauric acid solution was quickly added, the solution was heated to boiling, then 4 mL of a 1 wt% sodium citrate solution was quickly added, at this time, the solution immediately turned blue, and then the solution was continuously heated until the solution turned from blue to transparent orange-red, and continuously heated for about 7-10 min. A nano-gold dispersion was prepared (see table 1).
**dispersion SL03: lithium-philic nanoparticles as Sn.** The concentration and particle size of a nano-tin dispersion refer to Table 1.
**dispersion SL04: lithium-philic nanoparticles as Zn.** The concentration and particle size of a nano-zinc dispersion refer to Table 1.
**dispersion SL05: lithium-philic nanoparticles comprising two elements (two alloying mechanisms: solid solution + intermetallic compound)**

The dispersion SLO1 and the dispersion SL02 with the same volume were taken and uniformly mixed to obtain a composite dispersion SL05 of two lithium-philic nanoparticles with nano Ag and nano Au.
**dispersion SL06:** the preparation method was essentially the same as that of the dispersion SLO1, with the difference that no glucose was added.
**dispersions SL07-SL09: lithium-philic nanoparticles as Mg.** The concentration and particle size of a nano-magnesium dispersion refer to Table 1.
**Solution CT01 (control 1, reducing agent solvent):** a reducing agent solution with the same final concentration as SLO1 was prepared, differing from the SLO1 dispersion in that: a precursor of the lithium-philic nanoparticles was not added, the silver nitrate aqueous solution was replaced with equal mass of water, and pH was still adjusted by using NaOH.
**Solution CT02** (control 2, silver nitrate solution): a silver nitrate solution with the same final concentration as SLO1 was prepared, differing from the SLO1 dispersion in that no reducing agent was added, no reduction reaction was performed, a CMC aqueous solution and a glucose aqueous solution were replaced with equal mass of water, and pH was still adjusted with NaOH.

### Method for testing particle size Dₙ50:

Sample treatment: the sample may be diluted and placed in a quartz flask for measurement.

Equipment model: Malvern 2000 laser particle size analyzer (MasterSizer2000) was used, with reference to the standard process: GB/T19077-2016/ISO13320:2009, detailed testing process: taking a proper amount of a sample to be detected (the concentration of the sample could ensure 8-12% of shading degree), adding 20 mL of anhydrous ethanol, performing ultrasonic treatment for 5 min (53 KHz/120 W) to ensure that the sample was completely dispersed, and then measuring the sample according to the GB/T19077-2016/ISO 13320:2009 standard. In order to avoid agglomeration in the drying process from affecting the particle size, the washed wet sample was taken and subjected to a dispersion test.

**Table 1 Preparation and test parameters of dispersions containing lithium-philic nanoparticles**

| Parameter | lithium-philic nanoparticles | Concentration of lithium-philic nanoparticles (Concentration in dispersion) | Dₙ50 of lithium-philic nanoparticles in dispersion |
|---|---|---|---|
| SL01 | Ag | 400 µg/L | 50 nm |
| SL01a | Ag | 400 µg/L | 10 nm |
| SL01b | Ag | 400 µg/L | 100 nm |
| SL01c | Ag | 400 µg/L | 200 nm |
| SL02 | Au | 400 µg/L | 20 nm |
| SL03 | Sn | 400 µg/L | 50 nm |
| SL04 | Zn | 400 µg/L | 50 nm |
| SL05 | Ag and Au (at a mass ratio of 1 : 1) | Total of 400 µg/L of two types of particles | Meeting 10-100 nm |
| SL06 | Ag | 400 µg/L | 70 nm |
| SL07 | Mg | 500 µg/L | 50 nm |
| SL08 | Mg | 500 µg/L | 100 nm |
| SL09 | Mg | 500 µg/L | 300 nm |

### Example 1. A negative electrode active material layer has a double-layer structure comprising a lithium-philic composite layer (a first active layer) and a second active layer.

### 1.1. Preparation of positive electrode plate

A positive electrode active material of LiNi_{0.8}Co_{0.1}Mn_{0.1}O₂ (NCM811), a conductive agent of acetylene black, and a binder of PVDF were mixed at a mass ratio of 96 : 2 : 2, a solvent of N-methylpyrrolidone (NMP) was added, and the system was stirred until uniform to obtain a positive electrode slurry; and the positive electrode slurry was uniformly coated onto a positive electrode current collector aluminum foil with a thickness of 12 µm at a positive electrode surface capacity of 3.5 mAh·cm⁻². The positive electrode current collector aluminum foil was air-dried at room temperature, transferred to a 50°C oven, continuously dried for 5 h, and cut into a corresponding size for use.

### 1.2 Preparation of negative electrode plate

A double-layer coating composite structure was used. The negative electrode active material layer comprised a first active layer and a second active layer.

### (1) Negative electrode slurry

An active material of hard carbon, a conductive agent of carbon black, a styrene-acrylic binder of S_{D-3} (0.5% (w/v)), and an additive of sodium carboxymethyl cellulose (CMC) were dissolved in a deionized water solvent at a weight ratio of 95.5 : 1: 3.1 : 0.4, and the materials were mixed uniformly to prepare a negative electrode slurry.

(2) Lithium-philic modification 3 wt% of a lithium-philic nanoparticle dispersion (a nano-silver dispersion) was added into the negative electrode slurry, continuously and uniformly mixed, where the lithium-philic nanoparticle dispersion was added while stirring during the whole process. A first negative electrode slurry was prepared.

(3) Preparation of negative electrode substrate comprising carbon-based active material layer.

The first negative electrode slurry was uniformly coated onto a surface of one side of a negative electrode current collector of a copper foil, wherein the coating thickness of the single side was 100 µm, and the negative electrode current collector copper foil was dried to form a lithium-philic composite layer (namely a first active layer) to obtain a negative electrode substrate A with a preset CB value (in the example, the CB value is 0.6).

(4) Referring to the manufacturing process in step (3), a second negative electrode slurry is coated on the first active layer side of the negative electrode substrate A (the second negative electrode slurry is a negative electrode slurry prepared in step (1)), the negative electrode substrate was dried to form a second active layer on the first active layer, followed by cold-pressing and slitting, to obtain a composite negative electrode plate.

A single side surface capacity of the negative electrode plate is determined according to the preset surface capacity and the preset CB value of the positive electrode plate.

### 1.3 Separator

A polyethylene (PE) film was used as a separator. The separator was coated with a ceramic composite separator (CCS) ceramic coating on both sides.

The CCS ceramic coating refers to a nano-alumina Al₂O₃ coating.

### 1.4 Electrolyte

A lithium salt of LiPF6 (lithium hexafluorophosphate) was added into a mixed solvent of ethylene carbonate (EC) and ethyl methyl carbonate (EMC) at a mass ratio of 35 : 65, and uniformly mixed to obtain an electrolyte, wherein the molar concentration of LiPF6 in the electrolyte is 1 mol/L.

### 1.5 Assembly of secondary battery

The positive electrode plate, separator, and negative electrode plate were stacked in sequence such that the separator functions for separation between the positive and negative electrode plates, the bare cell were welded with tabs, is fixed in an aluminum-plastic film, with 0.4 g of an electrolyte being injected through an opening at one end of the aluminum-plastic film (a electrolyte injection coefficient of the battery cell meets 2.4-3.2 g/Ah), followed by heat sealing, to obtain an uncharged laminated dry battery cell. The uncharged dry battery cell was then successively subjected to procedures of leaving to stand, hot and cold pressing, shaping, and capacity testing to obtain a lithium-ion secondary battery.

**Examples 2-24** and **comparative examples 1-11** Referring to the preparation method of example 1 and parameter settings in Tables 1, 2 and 3, the negative electrode plates and lithium-ion secondary batteries were prepared.

**Example 2. A negative electrode active material layer was a single-layer structure.** The method essentially the same as example 1 was used, with the difference that: step (4) of the preparation process of the negative electrode plate was omitted, that is, the second active layer was also not arranged, and the negative electrode substrate prepared in step (3) was used as a negative electrode plate for assembling a secondary battery.

**Examples 3-5. Single-layer structure, a particle size of lithium-philic nanoparticles was adjusted.** The method essentially the same as example 2 was used, with the difference that: nano-silver dispersions with different particle sizes were used. In Examples 3-5 dispersions SL01a, SL01b and SL01c were used respectively.

**Examples 6-7. Single-layer structure, the amount of lithium-philic nanoparticles in a first negative electrode slurry was adjusted.** The method essentially the same as example 2 was used, with the difference that: the amount of the lithium-philic nanoparticles used in the preparation of the negative electrode plate was different from that of the first negative electrode active substance (examples 6-8 corresponding to 1 wt% and 5 wt%, respectively).

**Examples 8-10. Single-layer structure, the type of lithium-philic nanoparticles and the thickness of a first active layer were changed.** The method essentially the same as example 2 was used, with the difference that: lithium-philic nanoparticle dispersions with different types of lithium-philic substances were used, and in examples 8-10, the dispersions SL02, SL03 and SL04 were respectively used, and the lithium-philic substances Au, Sn and Zn were respectively used. In Examples 9-10, the single-layer coating thickness of a first negative electrode slurry were further changed.

**Example 11. Single-layer structure, lithium-philic nanoparticles comprised two lithium-philic metals, and the thickness of a first active layer were further changed.** The method essentially the same as example 2 was used, with the difference that: lithium-philic nanoparticles comprised two lithium-philic substances Ag + Au, the dispersion SL05 was used, and the thickness of the first active layer was further changed.

**Example 12. Single-layer structure, the type of a reducing agent was adjusted to control and regulate a particle size of nano-silver.** The method essentially the same as example 2 was used, with the difference that: the lithium-philic nanoparticle dispersion SL06 was used and the particle size of nano silver was different from that in SL01, wherein in the preparation of the dispersion SL06, glucose was omitted from a reducing agent on the basis of SL01.

**Examples 13-15. Single-layer structure, the type and CB value of a first negative electrode active substance were adjusted.** The method essentially the same as example 12 was used, with the difference that: the negative electrode active substances in the lithium-philic composite layer were different and the CB values were different. In Examples 13-15, a combination of hard carbon + graphite (example 13), a combination of hard carbon + soft carbon (example 15), and a combination of hard carbon + silicon (example 15) are used.

**Example 16. Single-layer structure, soft carbon was used as a first negative electrode active substance.** The method essentially the same as example 12 was used, with the difference that: the negative electrode active substances in the lithium-philic composite layer were different and the CB values were different. In Example 16, soft carbon was used as a first negative electrode active substance.

**Example 17. Double-layer structure.** The method essentially the same as example 12 was used, with the difference that: a second active layer was added. Compared with example 1, the difference lies in that the particle size of the lithium-philic nanoparticles was adjusted.

**Example 18. Double-layer structure, the thickness of a second active layer was adjusted.** The method essentially the same as example 17 was used, with the difference that: the thickness of the second active layer was different.

**Example 19. Double-layer structure, the type of the second negative electrode active substance was changed.** The method essentially the same as example 17 was used, with the difference that: the negative electrode active substance of the second active layer was replaced with hard carbon. At this time, the first negative electrode active substance was still hard carbon.

**Example 20. Double-layer structure, the types of a first negative electrode active substance and a second negative electrode active substance were changed.** The method essentially the same as example 17 was used, with the difference that: the negative electrode active substance of the first active layer was replaced with soft carbon and the negative electrode active substance of the second active layer was replaced with hard carbon.

**Examples 21-23. Single-layer structure, the type of lithium-philic nanoparticles and the thickness of a lithium-philic composite layer were changed.** The method essentially the same as example 2 was used, with the difference that: lithium-philic nanoparticle dispersions having different types of lithium-philic substances were used, the amount of lithium-philic nanoparticles was different, and the thickness of the lithium-philic composite layer was further changed. In addition, in examples 21 and 23 the particle size of the lithium-philic nanoparticles were further changed. In Examples 21-23, dispersions SL07, SL08 and SL09 were used respectively, and magnesium powders having different particle sizes were used respectively.

**Example 24. Single-layer structure based on different CB values.** The method essentially the same as example 12 was used, with the difference that: the CB value was 0.9 and the thickness of the first active layer was 150 µm.

**Comparative examples 1-3. Lithium-philic modification was omitted.** The method essentially the same as examples 1, 2 and 16 was used respectively, with the difference that: a step of lithium-philic modification was omitted, that is, step (3) in the preparation of the negative electrode plate was omitted, and the negative electrode slurry does not contain a dispersion containing lithium-philic nanoparticles.

**Comparative example 4. A precursor of lithium-philic nanoparticles was omitted and a reducing agent solution was used.** The method essentially the same as example 2 was used, with the difference that: the control group solution CTO1 was used to replace the lithium-philic nanoparticle dispersion SLO1, wherein the CTO1 contains CMC and glucose.

**Comparative example 5. A reducing agent was omitted and a silver nitrate solution was used.** The method essentially the same as example 2 was used, with the difference that: a blank solution CT02 (silver nitrate aqueous solution) was used to replace the lithium-philic nanoparticle dispersion SL01.

**Comparative examples 6-11 Lithiation-philic step was omitted relative to examples 6-8 and 18-20, respectively,** and no dispersion containing the corresponding lithium-philic nanoparticles was added to the negative electrode slurry.

**Table 2 Preparation parameters of negative electrode plate**

| Experime nt No. | lithium-philic nanoparticle dispersion | | | | First active layer | | Second active layer | | | CB value |
|---|---|---|---|---|---|---|---|---|---|---|
| | dispers ion No. | Type of lithium -philic nanopa rticles | Mass percentage of lithium-philic nanopartic les to first negative electrode active substance | Partic le size Dₙ50 | First negativ e electro de active substan ce | Thick ness (µm) | Arr ang ed or not | Seco nd negat ive electr ode activ e subst ance | Thick ness (µm) | |
| Example 1 | SL01 | Ag | 3% | 50 nm | Hard carbon | 100 | Yes | Soft carbo n | 10 | 0.6 |
| Example 2 | SL01 | Ag | 3% | 50 nm | Hard carbon | 100 | No | / | 0 | 0.6 |
| Example 3 | SL01a | Ag | 3% | 10 nm | Hard carbon | 100 | No | / | 0 | 0.6 |
| Example 4 | SL01b | Ag | 3% | 100 nm | Hard carbon | 100 | No | / | 0 | 0.6 |
| Example 5 | SL01c | Ag | 3% | 200 nm | Hard carbon | 100 | No | / | 0 | 0.6 |
| Example 6 | SL01 | Ag | 1% | 50 nm | Hard carbon | 100 | No | / | 0 | 0.6 |
| Example 7 | SL01 | Ag | 5% | 50 nm | Hard carbon | 100 | No | / | 0 | 0.6 |
| Example 8 | SL02 | Au | 3% | 20 nm | Hard carbon | 100 | No | / | 0 | 0.6 |
| Example 9 | SL03 | Sn | 3% | 50 nm | Hard carbon | 20 | No | / | 0 | 0.6 |
| Example 10 | SL04 | Zn | 3% | 50 nm | Hard carbon | 140 | No | / | 0 | 0.6 |
| Example 11 | SL05 | Ag + Au | 3% | 10-100 nm | Hard carbon | 80 | No | / | 0 | 0.6 |
| Example 12 | SL06 | Ag | 3% | 70 nm | Hard carbon | 100 | No | / | 0 | 0.6 |
| Example 13 | SL06 | Ag | 3% | 70 nm | Hard carbon graphit e (1 : 1) | 100 | No | / | 0 | 0.4 5 |
| Example 14 | SL06 | Ag | 3% | 70 nm | Hard carbon + soft carbon (1 : 1) | 100 | No | / | 0 | 0.4 5 |
| Example 15 | SL06 | Ag | 3% | 70 nm | Hard carbon + silicon (1 : 1) | 100 | No | / | 0 | 0.7 |
| Example 16 | SL06 | Ag | 3% | 70 nm | Soft carbon | 100 | No | / | 0 | 0.1 5 |
| Example 17 | SL06 | Ag | 3% | 70 nm | Hard carbon | 100 | Yes | Soft carbo n | 10 µm | 0.6 |
| Example 18 | SL01 | Ag | 3% | 70 nm | Hard carbon | 100 | Yes | Soft carbo n | 20 µm | 0.6 |

| | | | | | | | | | | |
|---|---|---|---|---|---|---|---|---|---|---|
| Example 19 | SL06 | Ag | 3% | 70 nm | Hard carbon | 100 | Yes | Hard carbo n | 10 µm | 0.6 |
| Example 20 | SL06 | Ag | 3% | 70 nm | Soft carbon | 100 | Yes | Hard carbo n | 10 µm | 0.3 |
| Example 21 | SL07 | Mg | 2.5% | 50 nm | Hard carbon | 120 | No | / | 0 | 0.6 |
| Example 22 | SL08 | Mg | 2.5% | 100 nm | Hard carbon | 120 | No | / | 0 | 0.6 |
| Example 23 | SL09 | Mg | 2.5% | 300 nm | Hard carbon | 120 | No | / | 0 | 0.6 |
| Example 24 | SL06 | Ag | 4.5% | 50 nm | Hard carbon | 150 | No | / | 0 | 0.9 |
| Comparati ve example 1 | / | None | / | / | Hard carbon | 100 | Yes | Soft carbo n | 10 µm | 0.6 |
| Comparati ve example 2 | / | None | / | / | Hard carbon | 100 | No | / | 0 | 0.6 |
| Comparati ve example 3 | / | None | / | / | Soft carbon | 100 | No | / | 0 | 0.1 5 |
| Comparati ve example 4 | CT01 | None | / | / | Hard carbon | 100 | No | / | 0 | 0.6 |
| Comparati ve example 5 | CT02 | None | / | / | Hard carbon | 100 | No | / | 0 | 0.6 |
| Comparati ve example 6 | / | None | / | / | Hard carbon | 100 | No | / | 0 | 0.6 |
| Comparati ve example 7 | / | None | / | / | Hard carbon | 20 | No | / | 0 | 0.6 |
| Comparati ve example 8 | / | None | / | / | Hard carbon | 140 | No | / | 0 | 0.6 |
| Comparati ve example 9 | / | None | / | / | Hard carbon | 100 | Yes | Soft carbo n | 20 µm | 0.6 |
| Comparati ve example 10 | / | None | / | / | Hard carbon | 100 | Yes | Hard carbo n | 10 µm | 0.6 |
| Comparati ve example 11 | / | None | / | / | Soft carbon | 100 | Yes | Hard carbo n | 10 µm | 0.3 |

In table 2, "/" indicates not added or not present. The two substances in the first negative electrode active substances of examples 13-15 were on the basis of a mass ratio, and "1 : 1" all represent a mass ratio of 1 : 1.

### Test analysis of parameters and performances

### 1. Lithium precipitation morphology on surface of negative electrode plate

A CP-SEM test process of lithium precipitation on a surface of a negative electrode plate was as follows: a secondary battery (full battery) to be tested was charged to 3.8 V at a constant current of 1/3 C at 25°C, an initial-circle fully charged battery cell was disassembled in a drying room or a glove box to obtain a negative electrode lithium precipitation electrode plate, an electrolyte main solvent of the full battery was used to wash the residual lithium salt crystal on the surface of the electrode plate, a region of 1 cm × 2 cm at a middle position of the negative electrode plate was taken and transferred in a vacuum transfer device or an inert atmosphere protection environment to an argon-ion beam grinding (CP) device for the preparation of a section at a low temperature, and after the cutting, attached onto a section sample table using a conductive adhesive tape and transferred into a vacuum cavity of a scanning electron microscope (SEM) for observation.

SEM test parameters: instrument model (Zeiss, Sigma 300), acceleration voltage 1.00 kV, magnification times 10,000, working distance 4.0 mm, and ETD (SE) mode.

### 2. Parameter and performance tests of battery

### (1) CB value of secondary battery

The CB value of a secondary battery was equal to a ratio of the negative electrode surface capacity to the positive electrode surface capacity.

The negative electrode surface capacity was obtained by testing according to the following method: a plurality of (at least 6) negative electrode plate small wafers were cut, the area A1 of each small wafer was calculated, a charge-discharge cut-off voltage (0-2 V) low-current cycling was set for lithium, the negative electrode capacity was calibrated according to corresponding 100 circles of experiment results, the capacity C1 of the negative electrode plate was measured, and the surface capacity of the negative electrode plate sample = C1/A1. The average value of the CB values of a plurality of parallel samples was taken and recorded as the CB value of the negative electrode plate.

The positive electrode surface capacity in each of examples and comparative examples was set to be 3.5 mAh·cm⁻² unless otherwise stated.

For example, a ratio of the negative electrode surface capacity of 2.1 mAh·cm⁻² in example 1 to the positive electrode surface capacity of 3.5 mAh·cm⁻² was 0.6, i.e., the CB value was 0.6.

### (2) Energy density test of battery cell

Under a discharge plateau (an NCM811/Li discharge plateau was 3.7 V), an initial-cycle discharge capacity (Ah) was multiplied by a discharge voltage z and then divided by the mass of a battery cell to obtain a ratio. That is, energy density = initial-cycle discharge capacity (Ah) × discharge plateau (3.7 V)/mass of battery cell (M).

Test conditions: the battery cell was normally charged to 4.3 V at normal temperature at 0.33 C, charged to 0.05 C at a constant voltage of 4.3 V, left to stand for 10 min, discharged to 2.8 V at 0.33 C (an NCM811/Li discharge plateau was 3.7 V), the initial-cycle discharge capacity (Ah) was recorded, the mass (M, unit kg) of the battery cell was weighed, and the energy density of the battery cell was obtained by calculation.

### (3) Cycling performance test of battery

A charge-discharge cycling test was performed using an electrochemical workstation, the prepared lithium-ion battery was charged to 4.3 V at 25°C at a constant current of 1.5 mA·cm², and then charged at a constant voltage of 4.3 V until the current was reduced to 0.3 mA·cm⁻²; and then the battery was discharged to 2.8 V at a constant current of 1.5 mA·cm⁻². The obtained capacity was recorded as the initial capacity C₀. The same battery was subjected to the repeated steps, the discharge capacity Cₙ of the battery after the nth cycle was recorded, wherein the battery capacity retention rate Pₙ = Cₙ/C₀ × 100% (n was the number of cycles) after each cycle, and P₁, P₂...Pₙ (taking points until Pₙ was equal to or less than 60%) as a Y-axis and the corresponding number of cycles as an X-axis, so as to obtain a curve of a full battery capacity retention rate and the number of cycles.

The test result can refer to "number of cycles (capacity attenuated to 60%)" in Table 3 and can further be recorded as n_{60%}.

For different battery samples, the "coulombic efficiency after initial cycling" was positively correlated with the number of cycles at which the capacity was attenuated to the same percentage, the more the number of cycles, the higher the corresponding coulombic efficiency.

### (4) Surface observation of negative electrode plate

A secondary battery after 100 cycles in the "battery capacity retention rate test" was disassembled. The surface morphology of the metal lithium negative electrode plate was observed by a metallographic optical microscope (Axio Observer Z1M) with a magnification of 1,000, so as to observe whether a lithium dendrite was generated.

### (5) In-situ expansion test of battery

An *in-situ* expansion test procedure of a battery was as follows: at 25°C, a secondary battery (full battery) to be tested was placed in the middle of an expansion force sensor of an *in-situ* expansion tester, a pretightening force of 100 N was set, the secondary battery was left to stand for 5 min, the initial thickness d₀ of the battery cell was recorded, the battery was charged to 4.3 V at a 1/3 C constant current, then charged to 0.05 C at a 4.3 V constant voltage, left to stand for 5 min, and then discharged to 2.8 V at 1/3 C, the thickness change of the battery cell in a constant pressure state was recorded *in situ* during the charge-discharge cycling, and after the completion, a curve was plotted by taking time as an X-axis and the corresponding thickness change as a Y-axis. The battery cell thickness of n circles (n was a positive integer) was recorded as dₙ.

The *in-situ* expansion rate of the battery cell of n circles was equal to (dₙ-d₀)/d₀× 100%. The *"in-situ* expansion rate of battery cell" in Table 3 corresponds to 100 cycles.

### (6) Initial-cycle coulombic efficiency test

The prepared lithium-ion battery was charged to 4.3 V at a constant current of 1.5 mA·cm⁻² at 25°C, and then charged to a current reduced of 0.3 mA·cm⁻² at a constant voltage of 4.3 V to obtain an initial-cycle charging specific capacity (Cc 1); and then the battery was discharged to 2.0 V at a constant current of 1.5 mA·cm⁻² to obtain a initial-cycle discharging specific capacity (Cd1), and the initial-cycle efficiency of the lithium-ion battery was calculated according to the following formula. initial-cycle coulombic efficiency of lithium-ion battery = initial-cycle specific discharging capacity (Cd1)/initial cycle specific charging capacity (Cc1). The test result was shown in Table 3 below.

The percentage of the initial-cycle discharging capacity to the initial-cycle charging capacity was the initial-cycle coulombic efficiency.

### Test results

The cross-sectional morphologies of the negative electrode plates of example 1 and comparative example 1 are shown in Fig. 4. It can be seen that the lithium dendrite growth of comparative example 1 is serious, the cross-sectional morphology is loose and porous, and the lithium metal deposition of example 1 is uniform and denser, which indicates that the used nanoparticles have an obvious effect of inducing lithium deposition.

The result of the *in-situ* expansion rate test of a full battery of example 1 and comparative example 1 is shown in Fig. 5. It can be seen that the expansion thickness of comparative example 1 is significantly higher than that of example 1, and the expansion thickness of example 1 during a discharging process is significantly reduced (close to the thickness before charging), indicating that the irreversible expansion is relatively small, lithium returns to the positive electrode material during a discharging process, but the irreversible expansion of comparative example 1 increases significantly after discharging. It is also apparent from Fig. 5 that the lithium precipitated in example 1 is more uniform and dense in deposition, presumably because the lithium-philic substance can be alloyed with lithium, and simultaneously induce a part of lithium to precipitate inside the electrode plate. However, the lithium precipitated in comparative example 1 is loose and porous and has a thickness (18 µm) significantly higher than that of example 1 (2 µm).

In examples 1 to 23, the lithium-philic substance is uniformly dispersed in the first active layer and can induce lithium to deposit inside the electrode plate. Compared with a corresponding comparative example in which no lithium is introduced, the number of cycles attenuated to a certain percentage (e.g., 60%) is significantly increased while maintaining a higher energy density, the cycle life is significantly improved (such that the coulombic efficiency after the initial cycle is also significantly improved), and in addition, the electrode plate expansion is significantly reduced, and the lithium dendrite problem is significantly alleviated, for example, example 1 is compared to comparative example 1, example 2 is compared to comparative examples 2, 4 and 5, example 16 is compared to comparative example 3, examples 8-9 are compared to comparative examples 6-8, and examples 18-20 are compared to comparative examples 9-11. Example 24 can realize a significant prolonging of the cycle life and a significant reduction of the electrode plate expansion while meeting a certain energy density.

**Table 3.**

| Experiment No. | CB value | Energy density of battery cell (Wh/kg) | Number of cycles (Capacity attenuated to 60%) | *In-situ* expansion rate of battery cell (%) | Initial-cycle coulombic efficiency (%) | Growth degree of dendrite |
|---|---|---|---|---|---|---|
| Example 1 | 0.6 | 400 | 975 | 8 | 88 | None |
| Example 2 | 0.6 | 400 | 722 | 12 | 86 | Average |
| Example 3 | 0.6 | 400 | 679 | 11 | 86 | Average |
| Example 4 | 0.6 | 400 | 712 | 12 | 86 | Average |
| Example 5 | 0.6 | 400 | 591 | 13 | 86 | Average |
| Example 6 | 0.6 | 400 | 457 | 13 | 84 | Average |
| Example 7 | 0.6 | 400 | 772 | 11 | 87 | Average |
| Example 8 | 0.6 | 400 | 652 | 12 | 86 | Average |
| Example 9 | 0.6 | 400 | 637 | 12 | 86 | Average |
| Example 10 | 0.6 | 400 | 620 | 12 | 86 | Average |
| Example 11 | 0.6 | 400 | 675 | 12 | 86 | Average |
| Example 12 | 0.6 | 400 | 694 | 12 | 86 | Average |
| Example 13 | 0.45 | 400 | 556 | 15 | 92 | Average |
| Example 14 | 0.45 | 400 | 507 | 15 | 91 | Average |
| Example 15 | 0.7 | 400 | 711 | 12 | 85 | Average |
| Example 16 | 0.15 | 400 | 394 | 19 | 94 | Average |
| Example 17 | 0.6 | 400 | 951 | 8 | 88 | None |
| Example 18 | 0.6 | 400 | 898 | 8 | 87 | None |
| Example 19 | 0.6 | 400 | 755 | 8 | 85 | Average |
| Example 20 | 0.3 | 400 | 374 | 18 | 93 | Average |
| Example 21 | 0.6 | 400 | 635 | 13 | 84 | Average |
| Example 22 | 0.6 | 400 | 623 | 13 | 85 | Average |
| Example 23 | 0.6 | 400 | 596 | 14 | 85 | Average |
| Example 24 | 0.9 | 240 | 1274 | 6 | 80 | Average |
| Comparative example 1 | 0.6 | 400 | 255 | 25 | 84 | Serious |
| Comparative example 2 | 0.6 | 400 | 128 | 30 | 84 | Serious |
| Comparative example 3 | 0.15 | 400 | 95 | 32 | 92 | Serious |
| Comparative example 4 | 0.6 | 400 | 195 | 21 | 85 | Serious |
| Comparative example 5 | 0.6 | 400 | 172 | 23 | 86 | Serious |
| Comparative example 6 | 0.6 | 400 | 212 | 24 | 84 | Serious |
| Comparative example 7 | 0.6 | 400 | 215 | 25 | 83 | Serious |
| Comparative example 8 | 0.6 | 400 | 229 | 24 | 85 | Serious |
| Comparative example 9 | 0.6 | 400 | 253 | 12 | 84 | Serious |
| Comparative example 10 | 0.6 | 400 | 238 | 16 | 91 | Serious |
| Comparative example 11 | 0.3 | 400 | 89 | 31 | 82 | Serious |

In Table 3, "energy density of battery cell" is a preset value. The values obtained by the test method of the "test analysis of parameters and performances" in section 2 (2) are slightly deviated from the preset value, but the fluctuation is not so large. The fluctuation ranges between the preset values and the measured values of examples 1-23 and comparative examples 1-11 are within a range of ±2 Wh/kg. In addition, the preset value is designed mainly based on the lithium-philic composite layer (i.e., the first active layer).

Comparative example 1 is taken as an example. No lithium-philic nanoparticles is added in the first negative electrode slurry of comparative example 1. Compared with example 1, in the case where the negative electrode active material layer has a double-layer structure, in comparative example 1, the cycling performance is obviously deteriorated, the electrode plate expansion is significantly increased, and the lithium dendrite problem is serious. The reason is presumed to be as follows: in the case that no lithium-philic substance exists, the lithium metal exceeding the CB value can be precipitated out on the surface of the electrode plate, which easily results in dendritic growth of the lithium, the lithium is still exposed in an electrolyte in spite of the induction action of a second active substance, as a result, a large amount of lithium loss is caused, the volume expansion is obviously increased in the cycling process, and the degree of the dendritic growth is aggravated along with cycling.

Comparative example 2 is taken as an example. No lithium-philic nanoparticles is added in the first negative electrode slurry of comparative example 2. Compared with example 2, in the case where the negative electrode active material layer has a single-layer structure, in comparative example 2, the cycling performance is obviously deteriorated, the electrode plate expansion is significantly increased, and the lithium dendrite problem is serious. The reason is presumed to be as follows: in the case that no lithium-philic substance exists, the lithium metal exceeding the CB value can be precipitated out on the surface of the electrode plate, the lithium is exposed in an electrolyte, a large amount of lithium loss is caused, and since the lithium dendrite growth is serious, the volume expansion is obviously increased during the cycling process.

Comparative example 3 is taken as an example. No lithium-philic nanoparticles is added in the first negative electrode slurry of comparative example 3. Compared with example 16, in the case where the lithium-philic composite layer comprises soft carbon as the first negative electrode active substance, in comparative example 3, the cycling performance is obviously deteriorated, the electrode plate expansion is significantly increased, and the lithium dendrite problem is serious. The reason is presumed to be as follows: Due to the fact that the capacity per gram of the soft carbon is low, most of lithium is precipitated outside a host material. Although the soft carbon serving as a substrate layer can induce the precipitated lithium metal to be deposited more uniformly and densely, a large amount of the lithium metal is still exposed in the electrolyte to cause loss of the lithium metal and the electrolyte, such that the cycling performance is sharply deteriorated, the volume expansion rate of the battery cell is relatively high, and dendritic growth in the cycling process is serious.

Comparative example 4 is taken as an example. In Comparative example 4, the dispersion CTO1 in which a precursor of lithium-philic nanoparticles is omitted is used to prepare a first negative electrode slurry, which is equivalent to adding a reducing agent solution to the negative electrode slurry, wherein the reducing agents are CMC and glucose. Compared with example 2, in the case where the negative electrode active material layer has a single-layer structure, in comparative example 4, the cycling performance is obviously deteriorated, the electrode plate expansion is significantly increased, and the lithium dendrite problem is serious. The reason is presumed to be as follows: in the case that no lithium-philic substance exists, the lithium metal exceeding the CB value can be precipitated out on the surface of the electrode plate, the lithium is exposed in an electrolyte, a large amount of lithium loss is caused, dendritic growth easily occurred, the volume expansion is obviously increased during the cycling process, the degree of the dendritic growth is aggravated over the cycling, and the cycle life is deteriorated dramatically.

Comparative example 5 is taken as an example. In Comparative example 5, the dispersion CT02 in which a reducing agent is omitted is used to prepare a first negative electrode slurry, which is equivalent to adding a silver nitrate solution to the negative electrode slurry. Compared with example 2, in the case where the negative electrode active material layer has a single-layer structure, in comparative example 5, the cycling performance is obviously deteriorated, the electrode plate expansion is significantly increased, and the lithium dendrite problem is serious. The reason is presumed to be as follows: the silver nitrate solution can not be reduced and is extremely easy to agglomerate with CMC in the negative electrode slurry during a mixing process. After the battery cell is prepared, in the case that no lithium-philic substance exists, the lithium metal exceeding the CB value can be precipitated out on the surface of the electrode plate, the lithium is exposed in the electrolyte, a large amount of lithium loss is caused, dendritic growth easily occurred, the volume expansion is obviously increased during the cycling process, the degree of the dendritic growth is aggravated over the cycling, and the cycle life is deteriorated dramatically.

It should be noted that, for other applicable lithium-philic nanoparticles types, when the negative active material layer of the negative electrode plate is prepared, the lithium-ion secondary battery is obtained without adding a corresponding dispersion to the first negative electrode slurry (including but not limited to example 24 with different CB value designs, using a magnesium nanoparticle as lithium-philic nanoparticles in examples 21 to 23, and using a Ag + Au mixed particle as lithium-philic nanoparticles in example 11), that is, the lithium-philic nanoparticles of the present application is not introduced into the negative electrode active material layer. According to a great amount of experimental searches of the present inventors, the experimental results also show that the cycle life is reduced (the number of cycles attenuated to a certain percentage (e.g., 60%) is reduced and in addition, the coulombic efficiency after the initial cycling is also reduced), the electrode plate expansion is significantly increased, and the lithium dendrite problem is aggravated.

The various technical features of the above examples can be combined in any manner, and in order to simplify the description, not all possible combinations of the various technical features of the above examples are described. However, the technical features should be considered to be within the scope of the description in the description, as long as there is no conflict between the combinations of the technical features.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. The examples described above merely illustrate several embodiments of the present application and are described relatively detailed, but should not be construed as limiting the patent scope. In addition, without departing from the gist of the present application, various modifications that are made to the embodiments and are conceivable to those skilled in the art, and other modes constructed by combining some of the constituent elements of the embodiments also fall within the scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims, and the description and the accompanying drawings may be used to explain the contents of the claims.

## Claims

1. A negative electrode plate, comprising a negative electrode active material layer, wherein the negative electrode active material layer comprises a negative electrode active substance and lithium-philic nanoparticles capable of alloying with lithium.

2. The negative electrode plate according to claim 1, wherein at least a part of the lithium-philic nanoparticles are distributed on a part of a surface of the negative electrode active substance.

3. The negative electrode plate according to claim 1 or 2, wherein the lithium-philic nanoparticles comprises a lithium-philic metal; and
optionally, the lithium-philic metal comprises one or more metals of the following group: Ag, In, Mg, Zn, Au and Sn, and an alloy of more of the foregoing metal elements.

4. The negative electrode plate according to claim 3, wherein the lithium-philic metal comprises one or more metals of the following group: Ag, In and Mg, and an alloy of more of the foregoing metal elements; or,
the lithium-philic metal comprises one or more metals of the following group: Zn, Au and Sn, and an alloy of more of the foregoing metal elements.

5. The negative electrode plate according to any one of claims 1-4, wherein the Dₙ50 of the lithium-philic nanoparticles is ≤ 500 nm;
optionally, the Dₙ50 of the lithium-philic nanoparticles is selected from 10 nm-300 nm;
further optionally, the Dₙ50 of the lithium-philic nanoparticles is selected from 10 nm-200 nm;
more further optionally, the Dₙ50 of the lithium-philic nanoparticles is selected from 10 nm-100 nm;
more further optionally, the Dₙ50 of the lithium-philic nanoparticles is selected from 20 nm-100 nm;
additionally optionally, the Dₙ50 of the lithium-philic nanoparticles is selected from 5 nm-320 nm; and
additionally optionally, the Dₙ50 of the lithium-philic nanoparticles is selected from 5 nm-120 nm.

6. The negative electrode plate according to any one of claims 1-5, wherein the negative electrode active material layer comprises an alloy formed by the lithium-philic nanoparticles and lithium.

7. The negative electrode plate according to any one of claims 1-6, wherein the negative electrode active material layer comprises a lithium-philic composite layer, and the lithium-philic composite layer is a structural layer in which the lithium-philic nanoparticles are distributed in a thickness direction of the negative electrode active material layer.

8. The negative electrode plate according to claim 7, wherein a part of the negative electrode active substance distributed in the lithium-philic composite layer is marked as a first negative electrode active substance,
wherein a mass percentage of the lithium-philic nanoparticles to the first negative electrode active substance is ≤ 6%; and
optionally, a mass percentage of the lithium-philic nanoparticles to the first negative electrode active substance is selected from 1%-5%.

9. The negative electrode plate according to claim 8, wherein the sum of mass percentages of the lithium-philic nanoparticles and the first negative electrode active substance in the lithium-philic composite layer is ≥ 90%;
optionally, the sum of mass percentages of the lithium-philic nanoparticles and the first negative electrode active substance in the lithium-philic composite layer is ≥ 92%;
further optionally, the sum of mass percentages of the lithium-philic nanoparticles and the first negative electrode active substance in the lithium-philic composite layer is ≥ 94%; and
more further optionally, the sum of mass percentages of the lithium-philic nanoparticles and the first negative electrode active substance in the lithium-philic composite layer is ≥ 95%.

10. The negative electrode plate according to any one of claims 7-9, wherein the thickness of the lithium-philic composite layer is selected from 5 µm-150 µm;
optionally, the thickness of the lithium-philic composite layer is selected from 20 µm-140 µm;
further optionally, the thickness of the lithium-philic composite layer is selected from 20 µm-120 µm;
more further optionally, the thickness of the lithium-philic composite layer is selected from 20 µm-100 µm;
additionally optionally, the thickness of the lithium-philic composite layer is selected from 10 µm-150 µm;
additionally optionally, the thickness of the lithium-philic composite layer is selected from 10 µm-125 µm; and
additionally optionally, the thickness of the lithium-philic composite layer is selected from 10 µm-100 µm.

11. The negative electrode plate according to any one of claims 8-10, wherein the first negative electrode active substance comprises a carbon-based material;
optionally, the first negative electrode active substance comprises a graphitization-like material;
further optionally, the first negative electrode active substance comprises one or more of hard carbon and soft carbon; and
more further optionally, the first negative electrode active substance comprises hard carbon.

12. The negative electrode plate according to claim 11, wherein in the lithium-philic composite layer, a mass percentage of the graphitization-like material in the first negative electrode active substance is ≥ 50%;
optionally, a mass percentage of the graphitization-like material in the first negative electrode active substance is selected from 80%-100%;
optionally, a mass percentage of the graphitization-like material in the first negative electrode active substance is selected from 90%-100%;
optionally, a mass percentage of the graphitization-like material in the first negative electrode active substance is selected from 95%-100%; and
optionally, a mass percentage of the graphitization-like material in the first negative electrode active substance is 100%.

13. The negative electrode plate according to claim 11 or 12, wherein in the lithium-philic composite layer, a mass percentage of the hard carbon in the first negative electrode active substance is ≥ 50%;
optionally, a mass percentage of the hard carbon in the first negative electrode active substance is selected from 80%-100%;
further optionally, a mass percentage of the hard carbon in the first negative electrode active substance is selected from 90%-100%;
more further optionally, a mass percentage of the hard carbon in the first negative electrode active substance is selected from 95%-100%; and
more further optionally, a mass percentage of the hard carbon in the first negative electrode active substance is 100%.

14. The negative electrode plate according to any one of claims 7-13, wherein the negative electrode plate comprises a negative electrode current collector and the negative electrode active material layer is arranged on at least one side of the negative electrode current collector; and
the negative electrode active material layer further comprises a second active layer, the second active layer is arranged on the side, away from the negative electrode current collector, of the lithium-philic composite layer, the second active layer comprises a second negative electrode active substance, and the second active layer does not comprise the lithium-philic nanoparticles.

15. The negative electrode plate according to claim 14, wherein the second negative electrode active substance comprises a graphitization-like material; and
optionally, the second negative electrode active substance comprises soft carbon.

16. The negative electrode plate according to claim 15, wherein in the second active layer, a mass percentage of the soft carbon in the second negative electrode active substance is ≥ 50%;
optionally, a mass percentage of the soft carbon in the second negative electrode active substance is selected from 80%-100%;
further optionally, a mass percentage of the soft carbon in the second negative electrode active substance is selected from 90%-100%;
more further optionally, a mass percentage of the soft carbon in the second negative electrode active substance is selected from 95%-100%; and
more further optionally, a mass percentage of the soft carbon in the second negative electrode active substance is 100%.

17. The negative electrode plate according to any one of claims 14-16, wherein the thickness of the second active layer is smaller than that of the lithium-philic composite layer;
optionally, the thickness of the second active layer is selected from 5 µm-25 µm;
further optionally, the thickness of the second active layer is selected from 10 µm-20 µm;
additionally optionally, the thickness of the second active layer is selected from 8 µm-22 µm; and
additionally optionally, the thickness of the second active layer is selected from 8 µm-12 µm.

18. A secondary battery, comprising a positive electrode plate, a separator, and a negative electrode plate according to any one of claims 1-17, wherein the separator is provided between the positive electrode plate and the negative electrode plate.

19. The secondary battery according to claim 18, wherein a CB value of the secondary battery is less than 1;
optionally, a CB value of the secondary battery is selected from 0.1-0.9; and
optionally, a CB value of the secondary battery is selected from 0.15-0.9,
wherein the side, facing the positive electrode plate, of the negative electrode plate comprises the negative electrode active material layer, the side, facing the negative electrode plate, of the positive electrode plate comprises a positive electrode active material layer, and the CB value is a capacity ratio of the negative electrode active material layer to the positive electrode active material layer which are oppositely arranged under the same area.

20. The secondary battery according to claim 18 or 19, wherein the secondary battery is a lithium-ion secondary battery;
further, the positive electrode plate comprises a positive electrode active substance;
optionally, the positive electrode active substance comprises a lithium-ion material, wherein the lithium-ion material comprises one or more of the following substances: a lithium-containing phosphate, a lithium transition metal oxide, and a substance composed of any of the foregoing substances and a doping element; and
further optionally, the positive electrode active substance comprises one or more of the following substances: lithium iron phosphate, lithium manganese iron phosphate, a lithium cobalt oxide, a lithium nickel oxide, a lithium manganese oxide, a lithium nickel manganese oxide, a lithium nickel cobalt manganese oxide, and a lithium nickel cobalt aluminum oxide, and a substance composed of any of the foregoing substances and a doping element,
wherein the doping element in any one of the positive electrode active substances independently comprises one or more of a transition metal element and a non-transition metal element.

21. A power consuming device, comprising at least one of a negative electrode plate according to any one of claims 1-17 and a secondary battery according to any one of claims 18-20.

22. A method for preparing a negative electrode plate, comprising the following steps:
preparing a first negative electrode slurry comprising a first negative electrode active substance and lithium-philic nanoparticles, wherein the lithium-philic nanoparticles are as defined in any one of claims 1, and 3-5;
coating the first negative electrode slurry onto at least one surface of a negative electrode substrate, and drying same to form a lithium-philic composite layer to prepare a lithium-philic substrate;
cold-pressing the lithium-philic substrate to prepare a negative electrode plate; or coating a second negative electrode slurry containing a second negative electrode active substance onto a surface of one side, comprising the lithium-philic composite layer, of the lithium-philic substrate, drying and cold-pressing same to form a second active layer, and preparing a negative electrode plate.

23. The preparation method according to claim 22, wherein the step of preparing the first negative electrode slurry comprises mixing the first negative electrode active substance and a dispersion containing the lithium-philic nanoparticles, wherein the concentration of the lithium-philic nanoparticles in the dispersion is selected from 100 µg/L-1,000 µg/L;
optionally, the concentration of the lithium-philic nanoparticles in the dispersion is selected from 200 µg/L-800 µg/L; and
further optionally, the concentration of the lithium-philic nanoparticles in the dispersion is selected from 400 µg/L-500 µg/L.

24. The preparation method according to claim 22 or 23, satisfying any one or more of the following features:
the step of preparing the first negative electrode slurry further comprises adding a conductive agent, a binder, and a solvent;
the first negative electrode active substance in the first negative electrode slurry is defined in accordance with the first negative electrode active substance in the lithium-philic composite layer in claim 8 or 11;
the second negative electrode active substance in the second negative electrode slurry is defined in accordance with the second negative electrode active substance in the second active layer in claim 14 or 15; and
the negative electrode plate is defined according to any one of claims 1-17.

25. The preparation method according to claim 23 or 24, wherein the dispersion is prepared by using a method comprising the following steps:
preparing a mixed solution containing a metal precursor, a reducing agent and optionally a dispersant, wherein the metal precursor comprises a salt-type precursor of the lithium-philic nanoparticles; and
subjecting the mixed solution to a reduction reaction to convert the salt-type precursor into the lithium-philic nanoparticles.
